# EUROPÄISCHE PATENTSCHRIFT

(11) **EP 3 003 929 B1**
(45) Veröffentlichungstag und Bekanntmachung des Hinweises auf die Patenterteilung: **09.08.2017**
(21) Anmeldenummer: 14730127.9
(22) Anmeldetag: 06.06.2014
(51) Int. Cl.: B65G 47/84, B65G 29/00

(54) **ÜBERGABEVORRICHTUNG**
TRANSFER APPARATUS
DISPOSITIF DE TRANSFERT

(30) Priorität: 07.06.2013 DE 102013210596
(43) Veröffentlichungstag der Anmeldung: 13.04.2016
(73) Patentinhaber: Bausch + Ströbel Maschinenfabrik Ilshofen GmbH + Co. KG, 74532 Ilshofen (DE)
(72) Erfinder: ACKERMANN, Simon, 74586 Frankenhardt (DE); BÖRRET, Florian, 74405 Gaildorf (DE)
(74) Vertreter: Jordan, Volker Otto Wilhelm
(86) Internationale Anmeldenummer: PCT/EP2014/061803
(87) Internationale Veröffentlichungsnummer: WO 2014/195447

(56) Entgegenhaltungen:
- EP-A1- 2 415 538
- EP-A2- 0 191 158
- WO-A1-03/037769
- DE-A1- 3 837 118
- DE-C3- 2 605 775
- US-A- 4 164 997

## Beschreibung

Die Erfindung betrifft eine Übergabevorrichtung zur Übergabe von Gegenständen von einer Zuführeinrichtung an eine Abnahmeeinrichtung, wobei die Übergabevorrichtung wenigstens einen der Zuführeinrichtung zugeordneten Aufnahmebereich, wenigstens einen der Abnahmeeinrichtung zugeordneten Abgabebereich und wenigstens zwei, vorzugsweise wenigstens drei um eine gemeinsame Drehachse drehbare Übergabesternsegmente aufweist, die jeweils mit wenigstens einer Aufnahme, vorzugsweise mit einer Mehrzahl von entlang eines Außenumfangs in einer Übergabedrehrichtung gemäß einer definierten Teilung beabstandeten Aufnahmen ausgeführt sind und in der Übergabedrehrichtung derart drehantreibar sind, dass ein jeweiliges Übergabesegment abwechselnd dem/einem Aufnahmebereich und dem/einem Abgabebereich räumlich zugeordnet ist durch Einnahme wenigstens einer dem Aufnahmebereich zugeordneten Drehstellung oder drehendes Passieren des Aufnahmebereichs bzw. durch Einnahme wenigstens einer dem Abgabebereich zugeordneten Drehstellung oder drehendes Passieren des Abgabebereichs, um aus dem Aufnahmebereich wenigstens einen der durch die Zuführeinrichtung in diesen zugeführten Gegenstände in die Aufnahme bzw. in eine jeweilige der Aufnahmen aufzunehmen und zum in der Übergabedrehrichtung nachfolgenden Abgabebereich zu überführen und über diesen an die Abnahmeeinrichtung abzugeben, wobei die Übergabesternsegmente mittels einer Drehantriebsanordnung der Übergabevorrichtung mit unterschiedlicher und nicht konstanter Drehgeschwindigkeit unter Verdrehung relativ zueinander bezogen auf die Drehachse drehantreibbar sind.

Derartige Übergabevorrichtungen sind aus der EP 1 588 961 A2 und der DE 10 2008 002 245 A1 bekannt. Es handelt sich um Übergabevorrichtungen, die zur Übergabe von Gegenständen, wie etwa Spritzen, Ampullen oder Fläschchen, von einer ersten Sternradanordnung zu einer zweiten Sternradanordnung dienen. Sternräder werden beispielsweise bei Transportaufnahmen für Füllmaschinen im pharmazeutischen Bereich verwendet, etwa im Zusammenhang mit der Prüfung, Befüllung und weiteren Prozessierung von Spritzen, Ampullen oder Fläschchen in automatisierten Anlagen. Die Sternräder können dabei als Einlaufstern bzw. Auslaufstern einzelner Maschinenbereiche dienen, beispielsweise von einem Füllbereich zu einem nachgeschalteten Verschlussbereich oder einem Bördelbereich zum Aufbördeln eines Deckels. Ein Inspektionsstern kann dazu dienen, die Gegenstände unterschiedlichen Inspektionsvorgängen zu unterziehen. Beispielsweise können Ampullen auf korrekte Befüllung, korrekten Verschluss oder Beschichtung überprüft werden, unter Verwendung von optischen oder anderen Prüfungsvorrichtungen. Es wird auf die Ausführungen in den beiden angesprochenen Druckschriften des Stands der Technik verwiesen.

Die genannten Druckschriften schlagen jeweils eine Übergabevorrichtung der angesprochenen Art vor, die dazu dient, eine Übergabe der Gegenstände von einem ersten Sternrad auf ein zweites Sternrad unabhängig von einer Teilung bzw. einem Teilungssprung zu ermöglichen. Es können somit die Gegenstände von dem ersten Sternrad, bei dem die Aufnahmen für die Gegenstände gemäß einer ersten Teilung entlang dem Außenumfang des Sternrads angeordnet sind, zu dem zweiten Sternrad, bei dem die Aufnahmen für die Gegenstände gemäß einer von der ersten Teilung abweichenden zweiten Teilung entlang des Außenumfangs des Sternrads angeordnet sind, übergeben werden. Dies wird dadurch erreicht, dass in der Übergabedrehrichtung aufeinander folgende Aufnahmen zu verschiedenen Übergabesternsegmenten gehören.

Bei beiden bekannten Lösungen sind drei mehrarmige Übergabesternsegmente vorgesehen, die jeweils mehrere Aufnahmen aufweisen, und zwar eine einzige Aufnahme an einem jeweiligen der Sternsegmentarme, so dass am Aufnahmebereich ein erster Gegenstand vom ersten Übergabesternsegment, der nächste (zweite) Gegenstand vom zweiten Übergabesternsegment und der nächste (dritte) Gegenstand vom dritten Übergabesternsegment aufgenommen wird und danach die nächsten Gegenstände wieder vom ersten, zweiten und dritten Übergabesternsegment aufgenommen werden, usw.. Die den Aufnahmebereich passierenden Aufnahmen sind dabei entsprechend der Teilung des Sternrads der Zuführeinrichtung voneinander beabstandet.

Die Übergabe der Gegenstände über den Abgabebereich erfolgt in entsprechender Reihenfolge, wobei auf den Drehweg von dem Aufnahmebereich zum Abgabebereich die Übergabesternsegmente so relativ zueinander verdreht werden, dass die in der Übergabedrehrichtung den Abgabebereich passierenden Aufnahmen entsprechend der Teilung des Sternrads der Abnahmeeinrichtung voneinander beabstandet sind.

Zum Begriff "Sternrad" ist darauf hinzuweisen, dass allgemein drehbare Kränze und Scheiben, die an ihrem Umfang eine Vielzahl von Aufnahmen für die Gegenstände, wie die angesprochen Ampullen oder Fläschchen, aufweisen, als "Sternrad" oder "Stern" bezeichnet werden, ohne hierdurch irgend eine spezielle Struktur abgesehen von der Drehbarkeit um eine Achse und das Vorsehen der Aufnahmen entlang einem Außenumfang zu implizieren.

Bei der Handhabung von Gegenständen, beispielsweise zu befüllenden Behältern (wie etwa die angesprochenen Spritzenkörper, Ampullen oder Fläschchen), ergeben sich aber auch andere Anforderungen neben der Anpassung zwischen Sternrädern unterschiedlicher Teilung der Aufnahmen am Außenumfang. So kann beispielsweise eine Übergabe der Gegenstände von einem kontinuierlich fördernden Maschinenbereich zu einem getaktet förderndem Maschinenbereich oder von einem getaktet fördernden Maschinenbereich zu einem kontinuierlich fördernden Maschinenbereich erforderlich sein. Ferner kann eine Übergabe zwischen einem getaktet förderndem Maschinenbereich, der mit einem ersten Fördertakt arbeitet, und einem getakteten Maschinenbereich, der mit einem von dem ersten Fördertakt unterschiedlichen zweiten Fördertakt arbeitet, erforderlich sein. Eine entsprechende Übergabevorrichtung der eingangs angesprochenen Art ist aus DE 26 05 775 C3 bekannt. Nach den Angaben in der Druckschrift sind die als "segmentartige Transportorgane" angesprochenen Übergabesternsegmente durch eine Kurvensteuerung an den Takt eines Transportrechners anpassbar. Die drehbar gelagerten Übergabesternsegmente werden über eine Kurve und jeweilige zwei Hebel gesteuert, so dass die Übergabesternsegmente zur Anpassung an den Maschinentakt verzögert (ggf. auch angehalten) und beschleunigt werden. Details der Konstruktion sind nicht offenbart. Vermutlich weist die Drehantriebsordnung eine mit einer Kurvensteuerung ausgeführte mechanische Koppeleinrichtung auf, über die die Übergabesternsegmente mit einer Dreheingangsseite der Koppeleinrichtung drehbewegungsverkoppelt sind und mittels eines auf die Dreheingangsseite wirkenden Drehantriebs gemeinsam drehantreibbar sind. Die Kurvensteuerung weist für jedes der Übergabesternsegmente wenigstens einen zugeordneten Abtaster auf, der mit wenigstens einer sich um die Drehachse erstreckenden geschlossenen Führungskurve der Kurvensteuerung eingreift und durch die an der Dreheingangsseite eingeleitete Antriebsdrehbewegung relativ zu der wenigstens einen Führungskurve verstellbar ist, um aus dem Verlauf der wenigstens einen Führungskurve eine definierte Relativdrehbewegung des jeweiligen Übergabesternsegments relativ zu einer Bezugsdrehbewegung aufgrund der an der Dreheingangsseite eingeleiteten Antriebsdrehbewegung abzuleiten. DE 38 37 118 A1 beschreibt eine gattungsgemäße Übergabevorrichtung. Der Erfindung liegt die Aufgabe zugrunde, eine Übergabevorrichtung zur Übergabe von Gegenständen von einer Zuführeinrichtung zu einer Abnahmeeinrichtung bereitzustellen, die kompakt und funktionssicher realisierbar ist.

Zur Lösung dieser Aufgabe wird eine Übergabevorrichtung zur Übergabe von Gegenständen von einer Zuführeinrichtung an eine Abnahmeeinrichtung bereitgestellt. Die Übergabevorrichtung weist wenigstens einen der Zuführeinrichtung zugeordneten Aufnahmebereich, wenigstens einen der Abnahmeeinrichtung zugeordneten Abgabebereich und wenigstens zwei, vorzugsweise wenigstens drei um eine gemeinsame Drehachse drehbare Übergabesternsegmente auf, die jeweils mit wenigstens einer Aufnahme, vorzugsweise mit einer Mehrzahl von entlang eines Außenumfangs in einer Übergabedrehrichtung gemäß einer definierten Teilung beabstandeten Aufnahmen ausgeführt sind und in der Übergabedrehrichtung derart drehantreibar sind, dass ein jeweiliges Übergabesegment abwechselnd dem/einem Aufnahmebereich und dem/einem Abgabebereich räumlich zugeordnet ist durch Einnahme wenigstens einer dem Aufnahmebereich zugeordneten Drehstellung oder drehendes Passieren des Aufnahmebereichs bzw. durch Einnahme wenigstens einer dem Abgabebereich zugeordneten Drehstellung oder drehendes Passieren des Abgabebereichs, um aus dem Aufnahmebereich wenigstens einen der durch die Zuführeinrichtung in diesen zugeführten Gegenstände in die Aufnahme bzw. in eine jeweilige der Aufnahmen aufzunehmen und zum in der Übergabedrehrichtung nachfolgenden Abgabebereich zu überführen und über diesen an die Abnahmeeinrichtung abzugeben. Die Übergabesternsegmente sind mittels einer Drehantriebsanordnung der Übergabevorrichtung mit unterschiedlicher und nicht konstanter Drehgeschwindigkeit unter Verdrehung relativ zueinander bezogen auf die Drehachse drehantreibbar. Die Drehantriebsanordnung weist eine mit einer Kurvensteuerung ausgeführte mechanische Koppeleinrichtung auf, über die die Übergabesternsegmente mit einer Dreheingangsseite der Koppeleinrichtung drehbewegungsverkoppelt sind und mittels eines auf die Dreheingangsseite wirkenden Drehantriebs gemeinsamen drehantreibbar sind. Die Kurvensteuerung weist für jedes der Übergabesternsegmente wenigstens einen zugeordneten Abtaster auf, der mit wenigstens einer sich um die Drehachse erstreckenden geschlossenen Führungskurve der Kurvensteuerung eingreift und durch die an der Dreheingangsseite eingeleitete Antriebsdrehbewegung relativ zu der wenigstens einen Führungskurve verstellbar ist, um aus dem Verlauf der wenigstens einen Führungskurve eine definierte Relativdrehbewegung des jeweiligen Übergabesternsegments relativ zu einer Bezugsdrehbewegung aufgrund der an der Dreheingangsseite eingeleiteten Antriebsbewegung abzuleiten. Erfindungsgemäß ist vorgesehen, dass ein um die Drehachse drehbar gelagerter Träger die Abtaster in radialem Abstand zur Drehachse drehbar lagert, die aufgrund der Antriebsdrehbewegung und gemäß dem Verlauf der wenigstens einen stationären Führungskurve um eine jeweilige, zur Drehachse parallele Abtasterdrehachse relativ zum Träger drehantreibbar sind, wobei die Abtaster mit dem jeweiligen zugeordneten Übergabesternsegment bewegungsverkoppelt sind, um dem Übergabesternsegment eine Drehbewegung zu erteilen, die einer Überlagerung aus der Bezugsdrehbewegung des Trägers und der aus der Drehung des Abtasters relativ zum Träger resultierenden Relativdrehbewegung entspricht.

Die erfindungsgemäße Übergabevorrichtung kann so kompakt, sehr funktionssicher und mit einer hohen Steifigkeit ausgeführt werden.

Der Erfindungsvorschlag setzt sich ab von jüngeren Realisierungsansätzen im Fachgebiet, nach denen jedem der Übergabesternsegmente ein eigener (etwa Servomotor-basierter) Drehantrieb zugehörig sein müsste, beispielsweise mit einem zwischen dem jeweiligen Übergabesternsegment und dem zugeordneten Drehantrieb vermittels Zahnrädern ausgebildeten Getriebe analog zur vorbekannten Lösung gemäß EP 1 588 961 A2 oder mit gesonderten Drehantrieben, die über eine Hohlwellenanordnung auf die Übergabesternsegmente wirken, analog zur vorbekannten Lösung gemäß DE 10 2008 002 245 A1. Bei solchen "modernen" Lösungsansätzen des Stands der Technik kann auf an sich einfache Weise durch entsprechende Ansteuerung der Drehantriebe erreicht werden, dass die Übergabesternsegmente sich entsprechend einem gewünschten Umdrehungszyklus um die Drehachse drehen.

Demgegenüber kann erfindungsgemäß die mechanische Koppeleinrichtung, vermittels der Kurvensteuerung, vorteilhaft dafür ausgeführt sein, eine an der Dreheingangsseite eingeleitete Antriebsdrehbewegung vorzugsweise konstanter Drehgeschwindigkeit in momentan unterschiedliche und zeitlich nicht konstante Drehgeschwindigkeiten und gewünschtenfalls momentan verschwindender Drehgeschwindigkeiten der Übergabesternsegmente für deren Drehung um die Drehachse gemäß einem gewünschten, definierten drehwinkelabhängigen Umdrehungszyklus umzusetzen. Es kann dann der den Übergabesternsegmenten gemeinsamen zugeordnete Drehantrieb kontinuierlich laufen und braucht keine besondere Ansteuerung zur Erzielung des gewünschten Umdrehungszyklus für die Übergabesternsegmente. Eine solche Lösung ermöglicht einen einfachen, robusten und zuverlässig arbeitenden Aufbau. Störprobleme, wie sie bei aufeinander abgestimmt anzusteuernden Drehantrieben auftreten können, werden vermieden. Ein einzelner Drehantrieb, der nur eine konstante Antriebsdrehgeschwindigkeit liefern soll, kann mit einer hohen Funktionssicherheit laufen. Es kann sich um einen Drehantrieb handeln, der auch zum Antrieb der Zuführeinrichtung und zum Antrieb der Abnahmeeinrichtung dient, wobei ggf. benötigte andere Drehgeschwindigkeiten bzw. lineare Antriebsbewegungen aus der von diesem gemeinsamen Drehantrieb gelieferten Antriebsdrehung mechanisch durch geeignete Getriebe und dergleichen abgeleitet werden können, so dass die Zuführeinrichtung, die Übergabevorrichtung und die Abnahmeeinrichtung zuverlässig synchron bzw. richtig aufeinander abgestimmt arbeiten können.

Angemerkt ist, dass die erfindungsgemäße Lösung mit der mechanischen Koppeleinrichtung auch im Hinblick auf die folgenden möglichen Störprobleme einer Lösung mit mehreren miteinander zu synchronisierenden gesonderten Drehantrieben vorteilhaft ist. Tritt bei einer Maschine eine Spannungsschwankung oder ein Spannungsausfall ein oder kommt es zu einer NOT-AUS-Situation, so müssten bei gesonderten Servoantrieben alle Servoachsen sich neu referenzieren. Hierzu müssten alle Bereiche, in welchen eine Übergabe von Objekten vom Antriebsbereich des einen Servoantriebs zum Antriebsbereich des nächsten Servoantriebs stattfindet, leergeräumt werden, da es hier ansonsten zu Bruch bei den Objekten oder/und zu Beschädigungen von Bauteilen kommen könnte. Solch ein Ausräumen der Übergabebereiche entfällt bei einer mechanischen Verkopplung miteinander wechselwirkender Maschinen.

Der Verlauf der Führungsbahnen bzw. allgemein der Führungskurven kann eine der Drehbewegung um die Drehachse überlagerte Abtasterdrehbewegung erzwingen, aus der die definierte Relativdrehbewegung des jeweiligen Übergabesternsegments relativ zu der Bezugsdrehbewegung mechanisch abgeleitet werden kann. Jeder der Abtaster kann beispielsweise mit wenigstens zwei, vorzugsweise wenigstens drei Kurvenfolgern (beispielsweise umfassend eine Kurvenfolgerrolle) in eine zugeordnete Führungsbahn (vorzugsweise wenigstens eine allen Abtastern gemeinsam zugeordnete Führungsbahn) eingreifen. Zweckmäßig kann der Träger der erfindungsgemäßen mechanischen Koppeleinrichtung als Dreheingangsseite dienen, so dass die Bezugsdrehbewegung des Trägers die eingeleitete Antriebsdrehbewegung ist.

Der Erfindungsvorschlag ermöglicht einen kompakt, funktionell zuverlässig und kostengünstig realisierbaren Aufbau der Drehantriebsanordnung.

Die angesprochene Bewegungsverkopplung der Abtaster mit den Übergabesternsegmenten wird erfindungsgemäß dadurch realisiert, dass die Abtaster jeweils einen mit diesem drehfesten Eingriffsabschnitt aufweisen oder mit einem jeweiligen gesonderten Eingriffselement zur gemeinsamen Drehung um die Abtasterdrehachse verbunden sind, wobei der Eingriffsabschnitt bzw. das Eingriffselement mit einem vorzugsweise radial innenliegenden Gegeneingriffselement eingreift, welches mit einem jeweils zugeordneten der Übergabesternsegmente zur gemeinsamen Drehung verbunden ist, wobei erfindungsgemäß der Eingriffsabschnitt bzw. das Eingriffselement und das Gegeneingriffelement einen Zahnkranz oder ein Zahnkranzsegment aufweisen, die miteinander kämmen. Auch diese konkrete Realisierung trägt zu den angesprochenen Vorteilen (kompakter, funktionell zuverlässiger und kostengünstig realisierbarer Aufbau) bei.

Allgemein kann vorgesehen sein, dass die Übergabesternsegmente über eine jeweilige Drehwelle von der Drehantriebsanordung drehantreibbar sind, wobei die Drehwellen vorzugsweise koaxial verlaufen und hierfür zumindest zum Teil als Hohlwellen ausgeführt sind. Diese Ausgestaltung ist speziell auch für die angesprochene Ausgestaltung der mechanischen Koppeleinrichtung vorteilhaft. Die Gegeneingriffselemente können dann von einer jeweiligen der Drehwellen drehfest getragen sein.

Weiterbildend wird vorgeschlagen, dass sich die Drehwellen durch ein vermittels einer Drehlageranordnung die Übergabesternsegmente drehbar lagerndes Stützrohr oder/und eine einen oberen, ggf. sterilen Bereich von einem unteren, ggf. nicht sterilen Bereich trennenden Trennplatte erstrecken, wobei die Übergabesternsegment im oberen Bereich angeordnet sind und die Kurvensteuerung mit der wenigstens einen Führungskurve und den Abtastern und ggf. dem Drehantrieb im unteren Bereich angeordnet ist. Eine so mögliche Trennung zwischen einem sterilen und einem nicht sterilen Bereich ist für viele Anwendungen sehr zweckmäßig. Eine bevorzugte Ausgestaltung zeichnet sich dadurch aus, dass die Trennplatte als Tragplatte ausgeführt ist, die das Stützrohr trägt. Die Tragplatte kann Teil eines Tisches oder einer Maschinenstuhlung der Übergabevorrichtung sein.

Für Anwendungen, wie sie an sich aus EP 1 588 961 A2 und DE 10 2008 002 245 A1 bekannt, können die Übergabesternsegmente mit mehreren Aufnahmen ausgeführt sein, wobei die Aufnahmen verschiedener Übergabesternsegmente aber in Umlaufrichtung aufeinander folgen, also keine zwei Aufnahmen des gleichen Übergabesternsegments in Umlaufrichtung benachbart sind. Die Übergabesternsegmente können also mit jeweils mehreren jeweils eine Aufnahme aufweisenden Segmentarmen ausgeführt sein.

Eine andere Möglichkeit ist, dass jedes Übergabesternsegment genau nur eine einzige Aufnahme aufweist, zur Erfüllung von Funktionen ähnlich wie die Lösungen gemäß EP 1 588 961 A2 und DE 10 2008 002 454 A1 als auch zur Erfüllung von Funktionen ähnlich wie die Lösung gemäß DE 26 05 775 C3. Es kann so beispielsweise eine Anpassung an einen Teilungssprung zwischen zwei Sternrädern erfolgen und es können so Objekte mit größerer Ausdehnung bzw. größerem Umfang gehandhabt werden.

Für Anwendungen, wie an sich aus DE 26 05 775 C3 bekannt, kann man besonders zweckmäßig vorsehen, dass die Übergabesternsegmente jeweils wenigstens eine Reihe von entlang dem Außenumfang beabstandeten Aufnahmen aufweisen, zwischen denen in der Übergabedrehrichtung keine Aufnahme eines anderen Übergabesternsegments angeordnet ist, so dass durch Verdrehen des jeweiligen Übergabesternsegments in der Übergabedrehrichtung vermittels der Drehantriebsanordnung die Aufnahmen der/einer solchen Reihe von Aufnahmen gemeinsam oder sequentiell nacheinander dem Aufnahmebereich räumlich zuordenbar sind, um eine Gruppe von Gegenständen aus dem Aufnahmebereich in die Aufnahmen der Reihe aufzunehmen und als Gruppe zum in der Übergabedrehrichtung nachfolgenden Abgabebereich zu überführen und über diesen an die Abnahmeeinrichtung abzugeben.

Die so ausgeführte Übergabevorrichtung ermöglicht eine gruppenweise Überführung und Übergabe von von der Zuführeinrichtung kontinuierlich zugeführten Gegenständen zu einer getaktet weiter befördernden Abnahmeeinrichtung oder umgekehrt die Überführung und Übergabe von getaktet mittels der Zuführeinrichtung zugeführten Gegenständen zu der kontinuierlich weiter befördernden Abnahmeeinrichtung. Hierzu können die Übergabesternsegmente beispielsweise am Aufnahmebereich als kontinuierlich sich drehender Übergabestern wirken, dessen Übergabesternsegmente die Gegenstände der Gruppe getaktet zum Abgabebereich überführen und über diesen an die Abnahmeeinrichtung abgeben oder es können die Übergabesternsegmente am Abgabebereich als sich kontinuierlich drehender Übergabestern wirken, dessen Übergabesternsegmente am Aufnahmebereich die Gegenstände getaktet gruppenweise von der Zuführeinrichtung übernehmen. Hierzu können die Übergabesternsegmente auf dem Drehweg zwischen dem Aufnahmebereich und dem Abgabebereich mit einer gegenüber der Drehgeschwindigkeit in einem dem Aufnahmebereich zugeordneten Drehwinkelbereich oder/und gegenüber einer Drehgeschwindigkeit in einem dem Abgabebereich zugeordneten Drehwinkelbereich erhöhten Drehgeschwindigkeit drehangetrieben werden, um zwischen der kontinuierlichen und der getakteten Förderung anzupassen. In entsprechender Weise können die Übergabesternsegmente auf dem Drehweg vom Abgabebereich zum Aufnahmebereich mit einer größeren Drehgeschwindigkeit drehangetrieben werden als die Drehgeschwindigkeit in dem dem Aufnahmebereich zugeordneten Drehwinkelbereich oder/und als die Drehgeschwindigkeit in dem dem Abgabebereich zugeordneten Drehwinkelbereich. In Frage kommende Ausgestaltungen eines drehwinkelabhängigen Umdrehungszyklus werden weiter unten diskutiert.

Es wird vor allem daran gedacht, dass von der Zuführeinrichtung und der Abnahmeeinrichtung eine für eine getaktete Förderung der Gegenstände und die andere für eine kontinuierliche Förderung der Gegenstände vorgesehen ist. Die Übergabevorrichtung kann dann dafür vorgesehen sein, kontinuierlich vermittels der Zuführeinrichtung über den Aufnahmebereich bereitgestellte Gegenstände über den Abgabebereich der Abnahmevorrichtung getaktet für eine getaktete Weiterbeförderung bereitzustellen, bzw. kann dafür vorgesehen sein, vermittels der Zuführeinrichtung über den Aufnahmebereich getaktet bereitgestellte Gegenstände über den Abgabebereich der Abnahmevorrichtung kontinuierlich für eine kontinuierliche Weiterbeförderung bereitzustellen.

Die Übergabevorrichtung kann aber auch dafür vorgesehen sein, den Förderstrom von Gegenständen zwischen einer gemäß einem ersten Fördertakt arbeitenden Zuführeinrichtung und einer gemäß einem vom ersten Fördertakt unterschiedlichen zweiten Fördertakt arbeitenden Abnahmeeinrichtung anzupassen.

Man kann vorsehen, dass die Aufnahmen der Gruppe durch eine Drehbewegung des Übergabesternsegments gemeinsam dem Aufnahmebereich oder dem Abgabebereich oder zuerst dem Aufnahmebereich und dann dem Abgabebereich räumlich zuordenbar sind, indem das Übergabesternsegment die dem Aufnahmebereich zugeordnete Drehstellung einnimmt, in der die Gruppe von Gegenständen aus dem Aufnahmebereich in die Aufnahmen der Reihe aufnehmbar ist bzw. indem das Übergabesternsegment die dem Abgabebereich zugeordnete Drehstellung einnimmt, in der die Gruppe von Gegenständen über den Abgabebereich an die Abnahmeeinrichtung abgebbar ist. Es kann also eine gruppenweise Zufuhr oder Abfuhr der Gegenstände in die Aufnahmen bzw. aus den Aufnahmen der Übergabesternsegmente realisiert sein. Gegenüber einer gruppenweiser Zufuhr und Abfuhr der Gegenstände in die bzw. aus den Aufnahmen der Reihe eines jeweiligen Übergabesternsegments ist aber eine sequentielle Zufuhr bzw. Abfuhr der Gegenstände bevorzugt. Hierzu wird vorgeschlagen, dass die Aufnahmen der Gruppe im Zuge einer Drehbewegung des Übergabesternsegments sequentiell nacheinander dem Aufnahmebereich oder dem Abgabebereich oder zuerst dem Aufnahmebereich und dann dem Abgabebereich räumlich zuordenbar sind, indem die Aufnahmen des Übergabesternsegments die dem Aufnahmebereich zugeordnete Drehstellung drehend passieren, in der ein jeweiliger Gegenstand der Gruppe von Gegenständen aus dem Aufnahmebereich in die betreffende Aufnahme der Reihe aufnehmbar ist, bzw. indem die Aufnahmen des Übergabesternsegments die dem Abgabebereich zugeordnete Drehstellung drehend passieren, in der ein jeweiliger Gegenstand der Gruppe von Gegenständen über den Abgabebereich an die Abnahmeeinrichtung abgebbar ist.

Technische Mittel, um Gegenstände wie etwa die angesprochenen Behälter in die Aufnahmen eines Sternrads zuzuführen, die Gegenstände während der Drehung des Sternrads in den Aufnahmen zu halten und schließlich die Gegenstände aus den Aufnahmen des Sternrads abzuführen, sind im Fachgebiet gut bekannt und können auch bei der erfindungsgemäßen Übergabevorrichtung in Bezug auf die Aufnahmen der Übergabesternsegmente zum Einsatz kommen. So wird etwa daran gedacht, dass von dem Aufnahmebereich und dem Abgabebereich wenigstens einer mit wenigstens einem Führungselement ausgeführt ist, welches die von der Zuführeinrichtung dem Aufnahmebereich sequentiell zugeführten Gegenstände einer jeweiligen Aufnahme des jeweiligen Übergabesternsegments zuführt bzw. welches die von einem jeweiligen Übergabesternsegment dem Abnahmebereich sequentiell zugeführten Gegenstände aus der jeweiligen Aufnahme des Übergabesternsegments der Abnahmeeinrichtung zur Weiterbeförderung zuführt.

Bevorzugte Ausführungsformen der erfindungsgemäßen Übergabevorrichtung zeichnen sich dadurch aus, dass von der Zuführeinrichtung und der Abnahmeeinrichtung wenigstens eine einen Transportstern aufweist, der entlang seines Außenumfangs in einer Transportdrehrichtung gemäß einer definierten, der Teilung der Übergabesternsegmente entsprechenden Teilung beabstandete Aufnahmen ausweist, die durch Drehen des Transportsterns in der Transportdrehrichtung sequentiell nacheinander einer jeweiligen Aufnahme eines jeweiligen der Übergabesternsegmente räumlich zuordenbar sind, indem die Aufnahmen des als Zuführsterns dienenden Transportsterns eine dem Aufnahmebereich zugeordnete Drehstellung drehend passieren, in der ein jeweiliger Gegenstand aus der betreffenden Aufnahme des Zuführsterns in die jeweilige Aufnahme des jeweiligen Übergabesternsegments zuführbar ist, bzw. indem die Aufnahmen des als Abführsterns dienenden Transportsterns eine dem Abgabebereich zugeordnete Drehstellung drehend passieren, in der ein jeweiliger Gegenstand aus der jeweiligen Aufnahme des jeweiligen Übergabesternsegments in die betreffende Aufnahme des Abführsterns zuführbar ist. Die Erfindung stellt auch eine entsprechende Anlage zur Handhabung von Gegenständen, beispielsweise zu befüllenden Behältern, bereit, umfassend die Übergabevorrichtung mit der die Gegenstände der Übergabevorrichtung zuführenden Zuführeinrichtung und der die Gegenstände von der Übergabevorrichtung erhaltenden Abnahmeeinrichtung.

Andere bevorzugte Ausführungsformen der erfindungsgemäßen Übergabevorrichtung zeichnen sich dadurch aus, dass von der Zuführeinrichtung und der Abnahmeeinrichtung wenigstens eine eine translatorische Fördereinrichtung aufweist zum translatorischen Führen und Fördern der Gegenstände entlang einer Führungsbahn, von der die Gegenstände der Gruppe über den Aufnahmebereich einer jeweiligen Aufnahme des jeweiligen Übergabesternsegments sequentiell zuführbar sind bzw. der die Gegenstände der Gruppe aus der jeweiligen Aufnahme des jeweiligen Übergabesternsegments über den Abgabebereich sequentiell zuführbar sind. Die Erfindung stellt auch eine entsprechende Anlage zur Handhabung von Gegenständen, beispielsweise zu befüllenden Behältern, bereit, umfassend die Übergabevorrichtung mit der die Gegenstände der Übergabevorrichtung zuführenden Zuführeinrichtung und der die Gegenstände von der Übergabevorrichtung erhaltenden Abnahmeeinrichtung.

Besonders bevorzugte Ausführungsformen der erfindungsgemäßen Übergabevorrichtung zeichnen sich dadurch aus, dass von der Zuführeinrichtung und der Abnahmeeinrichtung die eine den Transportstern (als Zuführstern bzw. als Abführstern) aufweist und die andere die translatorische Fördereinrichtung mit der Führungsbahn aufweist. Die Erfindung stellt auch eine entsprechende Anlage zur Handhabung von Gegenständen, beispielsweise zu befüllenden Behältern, bereit, umfassend die Übergabevorrichtung mit der die Gegenstände der Übergabevorrichtung zuführenden Zuführeinrichtung und der die Gegenstände von der Übergabevorrichtung erhaltenen Abnahmeeinrichtung. Beispielsweise kann die Zuführvorrichtung den Transportstern als Zuführstern aufweisen und die Abnahmeeinrichtung die translatorische Fördereinrichtung mit der Führungsbahn. Es wird ausdrücklich aber auch an die Möglichkeit gedacht, dass die Abnahmeeinrichtung den Transportstern als Abführstern aufweist und die Zuführeinrichtung die translatorische Fördereinrichtung mit der Führungsbahn.

Betreffend die translatorische Fördereinrichtung wird vor allem an eine getaktet arbeitende translatorische Fördereinrichtung gedacht, die für eine getaktete Förderung in einer Förderrichtung einer Reihe von definierte gegenseitige Gegenstandsabstände entlang der Führungsbahn aufweisenden Gegenständen ausgeführt ist, wobei ein Fördertakt die Reihe von Gegenständen um eine Förderstrecke entsprechend einem definierten Mehrfachen des gegenseitigen Gegestandsabstands entlang der Führungsbahn weiterbefördert. Derartige getaktete translatorische Fördereinrichtungen sind im Fachgebiet üblich und bedürfen keiner näheren Beschreibung. Beispielsweise kann die Fördereinrichtung eine Förder- und Halterechenanordnung aufweisen, mit wenigstens einem Halterechen, der in einer Querrichtung zur Führungsbahn zwischen einer Eingriffsstellung und einer Freigabestellung bewegbar ist, und wenigstens einem Förderrechen, der in einer Querrichtung zur Führungsbahn zwischen einer Eingriffsstellung und einer Freigabestellung bewegbar ist und der in der Eingriffsstellung längs der Führungsbahn in der Förderrichtung um die Förderstrecke bewegbar ist und der in der Freigabestellung längs der Führungsbahn entgegen der Förderrichtung um die Förderstrecke bewegbar ist, wobei die Rechen in der Eingriffsstellung mit einer Mehrzahl von Gegenständen der Reihe eingreifen und diese Gegenstände im Zusammenwirken mit der Führungsbahn entlang der Förderstrecke definiert positionieren und, im Falle des Förderrechens bei dessen Bewegung in der Förderrichtung, entlang der Führungsbahn fördern und in der Freigabestellung die Mehrzahl von Gegenständern der Reihe für eine Positionierung und gegebenenfalls Förderung durch den jeweils anderen Rechen freigeben.

Bevorzugt ist vorgesehen, dass die gegenseitigen Gegenstandsabstände dem gegenseitigen Abstand der Aufnahmen der Reihe von Aufnahmen eines jeweiligen Übergabesternsegments entsprechen oder/und dass der Fördertakt die Reihe von Gegenstände um eine Förderstrecke weiterbefördert, die einem N-fachen des gegenseitigen Gegenstandsabstands entspricht, wobei N die Anzahl der mittels eines jeweiligen Übergabesternsegments als jeweilige Gruppe vom Aufnahmebereich zum Ausgabebereich überführten und an die Abnahmeeinrichtung abgegebenen Gegenständen ist. Die Übergabevorrichtung ist so strukturell und funktional gut an die getaktete translatorische Fördereinrichtung angepasst, um so zuverlässig die Gegenstände gruppenweise von der getakteten Zuführeinrichtung zu übernehmen bzw. die Gegenstände zuverlässig gruppenweise an die getaktete Abnahmeeinrichtung zu übergeben.

Wie schon angesprochen, kann vorteilhaft vorgesehen werden, dassdie Übergabesternsegmente durch die Drehantriebsanordnung gemäß einem definierten drehwinkelabhängigen Umdrehungszyklus mit momentan unterschiedlichen und zeitlich nicht konstanten Drehgeschwindigkeiten und gewünschtenfalls momentan verschwindenden Drehgeschwindigkeiten um die Drehachse drehantreibbar sind, wobei der Umdrehungszyklus vorsieht, dass das jeweilige Übergabesternsegment beim Passieren des Aufnahmebereich eine erste Drehgeschwindigkeit erreicht und beim Passieren des Abgabebereichs eine gegenüber der ersten Drehgeschwindigkeit gewünschtenfalls unterschiedliche dritte Drehgeschwindigkeit erreicht, und dass das jeweilige Übergabesternsegment auf dem Drehweg vom Aufnahmebereich zum Abgabebereich eine die erste oder/und die dritte Drehgeschwindigkeit übersteigende zweite Drehgeschwindigkeit erreicht. Weiterbildend wird vorgeschlagen, dass die Übergabesternsegmente durch die Drehantriebsanordnung gemäß dem Umdrehungszyklus derart drehantreibbar sind, dass die vorzugsweise die dritte Drehgeschwindigkeit übersteigende erste Drehgeschwindigkeit zu einer in einem Fördertakt auftretenden Fördergeschwindigkeit der für eine getaktete Förderung der Gegenstände vorgesehenen Zuführeinrichtung korrespondiert oder dass die vorzugsweise die erste Drehgeschwindigkeit übersteigende dritte Drehgeschwindigkeit zu einer in einem Fördertakt auftretenden Fördergeschwindigkeit der für eine getaktete Förderung der Gegenstände vorgesehenen Abnahmeeinrichtung korrespondiert. Ferner wird vorgeschlagen, dass die Übergabesternsegmente durch die Drehantriebsanordnung gemäß dem Umdrehungszyklus derart drehantreibbar sind, dass die dritte Drehgeschwindigkeit, die vorzugsweise kleiner als die erste Drehgeschwindigkeit ist, zu einer Fördergeschwindigkeit der für eine kontinuierlichen Förderung der Gegenstände vorgesehenen Abführeinrichtung korrespondiert oder dass die erste Drehgeschwindigkeit, die vorzugsweise kleiner als die dritte Drehgeschwindigkeit ist, zu einer Fördergeschwindigkeit der für eine kontinuierliche Förderung der Gegenstände vorgesehenen Zuführeinrichtung korrespondiert.

Ferner wird in diesem Zusammenhang vorgeschlagen, dass der Umdrehungszyklus auf dem Drehweg des jeweiligen Übergabesternsegments von dem Aufnahmebereich zum Abgabebereich im Falle der für eine getaktete Förderung der Gegenstände vorgesehenen Zuführeinrichtung eine momentane Reduzierung der Drehgeschwindigkeit von der ersten Drehgeschwindigkeit auf eine minimale oder verschwindende Drehgeschwindigkeit vor einer Beschleunigung auf die zweite Drehgeschwindigkeit vorsieht oder im Falle der für eine getaktete Förderung der Gegenstände vorgesehenen Abnahmeeinrichtung eine momentane Reduzierung der Drehgeschwindigkeit von der zweiten Drehgeschwindigkeit auf eine minimale oder verschwindende Drehgeschwindigkeit vor einer Beschleunigung auf die dritte Drehgeschwindigkeit vorsieht.

Ferner kann der Umdrehungszyklus vorteilhaft vorsehen, dass das jeweilige Übergabesternsegment auf dem Drehweg vom Abgabebereich zum Übergabebereich eine die erste oder/und die dritte Drehgeschwindigkeit übersteigende vierte Drehgeschwindigkeit erreicht, mit entsprechender Beschleunigung und dann Abbremsen der Drehbewegung, um dann schließlich sich dem Aufnahmebereich mit der ersten Drehgeschwindigkeit anzunähern. Die vierte Drehgeschwindigkeit kann der dritten Drehgeschwindigkeit entsprechen oder kleiner oder größer als diese sein.

Durch die verschiedenen Weiterbildungsvorschläge im Zusammenhang mit dem definierten drehwinkelabhängigen Umdrehungszyklus kann der Betrieb der Übergabevorrichtung optimal an die Gegenstandszuführung durch die Zuführeinrichtung und die Gegenstandsabnahme durch die Abnahmeeinrichtung angepasst werden. Erfindungsgemäß wird der drehwinkelabhängige Umdrehungszyklus vermittels einer Kurvensteuerung der mechanischen Koppeleinrichtung erreicht.

Die Erfindung stellt ferner eine Anlage zur Handhabung von Gegenständen, beispielsweise zu befüllenden Behältern, bereit, umfassend eine Übergabevorrichtung mit einer die Gegenstände der Übergabevorrichtung zuführenden Zuführeinrichtung und einer die Gegenstände von der Übergabevorrichtung erhaltenen Abnahmeeinrichtung gemäß den vorangehenden Erfindungs- und Weiterbildungsvorschlägen und den Angaben zu in Frage kommenden Ausgestaltungen der Zuführeinrichtung und der Abnahmeeinrichtung.

Die Erfindung stellt ferner ein Verfahren zum Handhaben von Gegenständen, beispielsweise zu befüllenden Behältern, mittels der erfindungsgemäßen Anlage zur Handhabung von Gegenständen bereit. Nach der Erfindung umfasst das Verfahren ein kontinuierliches oder getaktetes Zuführen von Gegenständen zu der Übergabevorrichtung mittels der Zuführeinrichtung, ein Überführen der Gegenstände zu der Abnahmeeinrichtung mittels der Übergabeeinrichtung und eine getaktete oder kontinuierliche Weiterbeförderung der Gegenstände mittels der Abnahmeeinrichtung. Vorzugsweise ist vorgesehen, dass die Gegenstände durch die Zuführeinrichtung kontinuierlich der Übergabevorrichtung zugeführt und durch die Abnahmeeinrichtung getaktet weiterbefördert werden oder dass die Gegenstände durch die Zuführeinrichtung getaktet der Übergabevorrichtung zugeführt und durch die Abnahmeeinrichtung kontinuierlich weiterbefördert werden.

Eine besonders bevorzugte Ausgestaltung des Verfahrens umfasst eine getaktete Befüllung der als Behälter ausgeführten Gegenstände durch eine Befülleinrichtung, die der getakteten Abnahmeeinrichtung zugehörig ist oder der die Gegenstände über die getaktete Abnahmeeinrichtung zugeführt werden oder die der getakteten Zuführeinrichtung zugehörig ist oder von der die Gegenstände der getakteten Zuführeinrichtung zugeführt werden.

Die Erfindung wird im Folgenden anhand eines exemplarischen Ausführungsbeispiels unter Bezugnahme auf die beigefügte Zeichnung mit Fig. 1 bis 5 näher erläutert.
- Fig. 1: zeigt eine Anlage zur Handhabung von Gegenständen, beispielsweise zu befüllenden Behältern, umfassend eine erfindungsgemäße Übergabevorrichtung zwischen einer die Gegenstände der Übergabevorrichtung zuführenden Zuführeinrichtung (im Beispielsfall mit einem kontinuierlich zuführenden Zuführstern) und einer die Gegenstände von der Übergabevorrichtung erhaltenden Abnahmeeinrichtung (im Beispielsfall einer translatorischen Fördereinrichtung zur getakteten Förderung der erhaltenen Gegenstände entlang einer Führungsbahn).
- Fig. 2: zeigt eine perspektivische seitliche Ansicht einer bevorzugten Ausführungsform der erfindungsgemäßen Übergabevorrichtung, die in Fig. 1 in einer Draufsicht auf drei Übergabesternsegmente gezeigt ist und in Fig. 2 mit ihrer eine mechanische Koppeleinrichtung umfassenden Drehantriebsanordnung dargestellt ist.
- Fig. 3: zeigt eine Schnittansicht durch die Übergabevorrichtung nach Schnittlinie III-III in Fig. 4.
- Fig. 4: ist eine Draufsicht auf die Übergabesternsegmente in Richtung deren Drehachse entsprechend der Darstellung in Fig. 1.
- Fig. 5: ist eine weitere perspektivische seitliche Ansicht der bevorzugten Ausführungsform der erfindungsgemäßen Übergabevorrichtung mit Sichtrichtung von schräg unten zur Darstellung des Aufbaus einer mechanischen Koppeleinrichtung der Drehantriebsanordnung.

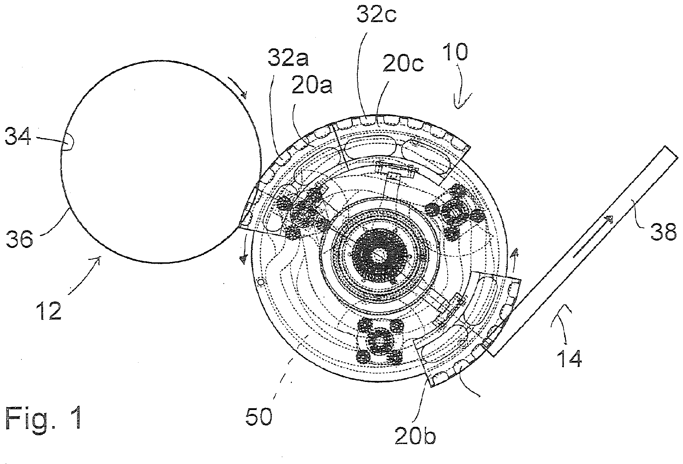

Die Fig. 1 bis 5 zeigen ein Beispiel für eine erfindungsgemäße, beispielsweise drei Übergabesternsegmente 20a, 20b und 20c aufweisende Übergabevorrichtung 10 zur Übergabe von Gegenständen von einer Zuführeinrichtung 12 zu einer Abnahmeeinrichtung 14. Die Zuführeinrichtung 12, die Übergabevorrichtung 10 und die Abnahmeeinrichtung 14 bilden gemeinsam eine Ausführungsform einer erfindungsgemäßen Anlage zum Handhaben von Gegenständen.

Ohne Beschränkung der Allgemeinheit kann die Zuführeinrichtung 12 einen Zuführstern 36 aufweisen, der in der schematischen Fig. 1 durch einen Kreis repräsentiert ist, der die gesamte Zuführeinrichtung 12 repräsentieren soll. Natürlich kann die Zuführeinrichtung 12 einen Zuführstern 36 mit größerem Radius als in Fig. 1 dargestellt aufweisen, beispielsweise mit einem Radius entsprechend dem Radius der Übergabesternsegmente der Übergabevorrichtung 10.

Ohne Beschränkung der Allgemeinheit kann es sich bei der Abnahmeeinrichtung 14 um eine translatorische Fördereinrichtung zum translatorischen Führen und Fördern der Gegenstände entlang einer Führungsbahn handeln. Deren Führungsbahn 38 ist in Fig. 1 durch ein langgestrecktes Rechteck repräsentiert, das die gesamte Abnahmeeinrichtung 14 repräsentieren soll. Bei der translatorischen Fördereinrichtung kann es sich um eine Fördereinrichtung für eine getaktete Förderung der Gegenstände handeln, die entlang der Führungsbahn 38 mit definierten gegenseitigen Gegenstandsabständen gefördert werden, beispielsweise vermittels einer Förder- und Halterechenanordnung.

Es ist aber auch ohne weiteres möglich, dass die Zuführeinrichtung als translatorische Fördereinrichtung zum translatorischen Führen und Fördern der Gegenstände, insbesondere für die getaktete Förderung der Gegenstände, ausgeführt ist und die Abnahmeeinrichtung als mit einem eine kontinuierliche Förderung ermöglichenden Abführstern ausgeführt ist. Fig. 1 kann auch eine solche Anlage zur Handhabung von Gegenständen repräsentieren, indem 14 die Zuführeinrichtung und 12 die Abnahmeeinrichtung repräsentiert und die eine jeweilige Bewegungs- bzw. Förderrichtung repräsentierenden Pfeile gedanklich durch Pfeile entgegengesetzter Pfeilrichtung ersetzt werden.

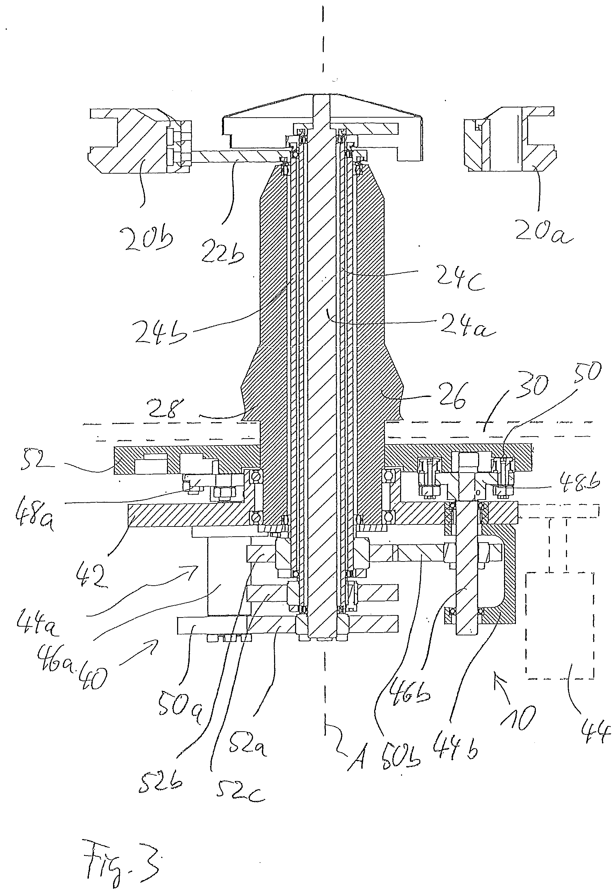

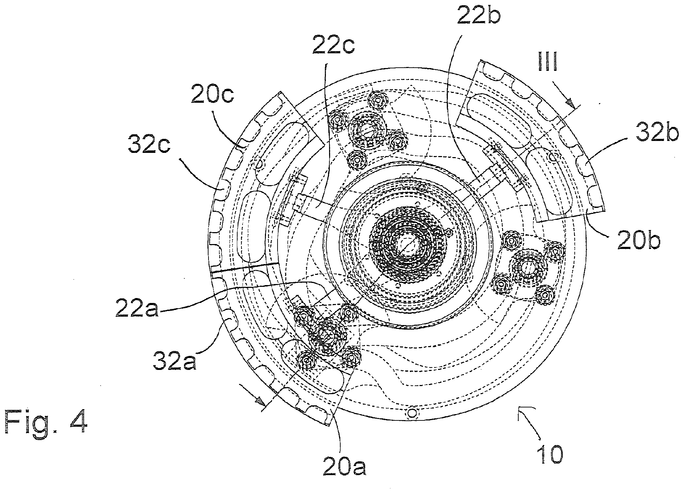

Die Übergabevorrichtung 10 weist, wie schon erwähnt, drei Übergabesternsegmente 20a, 20b und 20c auf, die um eine gemeinsame Drehachse A in einer Übergabedrehrichtung drehbar sind, in der Darstellung der Fig. 1 und 4 im angenommenen Beispielsfall entgegen dem Uhrzeigersinn. Die Übergabesternsegmente sind über einen jeweiligen sich radial erstreckenden Haltearm 22a, 22b bzw. 22c mit einer zugeordneten Drehwelle 24a, 24b bzw. 24c drehfest verbunden, die sich koaxial zueinander in einem stationären Stützrohr 26 erstrecken. Die innerste Drehwelle 24a ist als Vollwelle und die beiden anderen Drehwellen 24b und 24c sind als Hohlwellen ausgeführt. Die Drehwellen erstrecken sich in einem oberen Bereich ein Stück aus dem Stützrohr 26 heraus. Zwischen einem oberen Ende des Stützrohrs 26 und einem drehfest von der Drehwelle 24b getragenen Ringabschnitt des Haltearms 22b ist ein Drehlager wirksam. In entsprechender Weise ist zwischen dem Ringabschnitt des Haltearms 22b und einem drehfest von der Drehwelle 24c getragenen Ringabschnitt des Haltearms 22c ein Drehlager wirksam. Ferner ist zwischen dem Ringabschnitt des Haltearms 22c und einem von der inneren Drehwelle 24a drehfest getragenen Ringabschnitt des Haltearms 22a ein Drehlager wirksam. Diese Drehlager sind in Fig. 3 angedeutet. Das Stützrohr 26 lagert also unter Vermittlung der angesprochenen Drehlager und der angesprochenen Haltearme die drei Übergabesternsegmente, so dass diese um die Drehachse A drehbar sind und eine definierte Lage entlang der Drehachse A haben.

Das Stützrohr 26 kann (wie dargestellt) in einem mittleren Bereich seiner Erstreckung einen Ringvorsprung 28 aufweisen, mit dem sich das Stützrohr 26 auf einer Tragplatte einer Stuhlung der Übergabevorrichtung abstützen kann. Die Stuhlung kann beispielsweise in der Art eines Tisches mit einer Tischplatte ausgeführt sein, die als Tragplatte dient. Die Tragplatte bzw. Tischplatte kann also eine Durchgangsöffnung aufweisen, durch die sich das Stützrohr 26 erstreckt und mit dem Ringvorsprung 28 auf der Tragplatte bzw. Tischplatte aufsitzt. Durch diese Tragplatte bzw. Tischplatte kann eine Trennung zwischen einem Sterilbereich oberhalb der Platte und einem unsterilen Bereich unterhalb der Platte realisiert sein. Unterhalb der Platte befindet sich eine noch näher zu beschreibende Drehantriebsanordnung oder zumindest eine mechanische Koppeleinrichtung der Drehantriebsanordnung zum Drehantreiben der Übergabesternsegmente mit unterschiedlicher und nicht konstanter Drehgeschwindigkeit unter Verdrehung relativ zueinander. In Fig. 3 ist die vorzugsweise als ebene Platte ausgeführte Tragplatte bzw. Tischplatte gestrichelt angedeutet und mit 30 bezeichnet. Die Platte 30 kann noch etwas massiver ausgeführt sein als in Fig. 3 angedeutet.

Gemäß dem dargestellten Beispiel sind drei Übergabesternsegmente vorgesehen, nämlich die Segmente 20a, 20b und 20c. Es ist nicht ausgeschlossen, dass auch nur zwei Übergabesternsegmente oder auch mehr als drei Übergabesternsegmente vorhanden sein können, in Abhängigkeit von deren Ausdehnung in Umfangsrichtung, also dem jeweils eingenommenen Umfangswinkelbereich, dem Radialabstand von der Drehachse und der Anzahl von entlang einem Außenumfang des jeweiligen Übergabesternsegments in definierten Abständen vorhandenen Aufnahmen für die von der Zuführeinrichtung an die Abnahmeeinrichtung zu überführenden Gegenstände. Wie viele Übergabesternsegmente erforderlich bzw. zweckmäßig sind, hängt ferner von der von der Übergabevorrichtung zu leistenden Übergabe- bzw. Anpassungsfunktionalität und damit von der Ausbildung und Funktionsweise einerseits der Zuführeinrichtung und andererseits der Abnahmeeinrichtung ab. Für viele Anwendungen werden wenigstens drei Übergabesternsegmente benötigt werden, aber auch nicht mehr als drei Übergabesternsegmente erforderlich sein, so dass es besonders bevorzugt ist, drei Übergabesternsegmente vorzusehen.

Gemäß dem beschriebenen Ausführungsbeispiel weisen die Übergabesternsegmente 20a, 20b und 20c jeweils eine Reihe von beispielsweise sechs entlang des Außenumfangs beabstandeten Aufnahmen 32a bzw. 32b bzw. 32c auf, die entlang des Außenumfangs Abstände entsprechend einer definierten Teilung aufweisen, die der Teilung entsprechender Aufnahmen 34 des Zuführsterns 36 der Zuführeinrichtung 12 entspricht. In Fig. 1 ist nur eine solche Aufnahme 34 symbolhaft angedeutet. Es erfolgt auf an sich bekannte Art und Weise eine kontinuierliche Übergabe von mittels des Zuführsterns 36 zugeführten Gegenständen aus einer jeweiligen Aufnahme 34 des Zuführsterns 26 in eine jeweilige Aufnahme 32a bzw. 32c bzw. 32b eines jeweiligen der drei Übergabesternsegmente 20a, 20c und 20b, und zwar zyklisch in dieser Reihenfolge. Natürlich können die Übergabesternsegmente auch mehr als sechs oder weniger als sechs Aufnahmen aufweisen, typischerweise aber eine Mehrzahl von Aufnahmen. Bevorzugt korrespondiert die Anzahl von Aufnahmen eines jeweiligen Übergabesternsegments mit dem Fördertakt der Abnahmeeinrichtung 14. Im Beispielsfall werden in einem Fördertakt sechs Gegenstände von einem jeweiligen der Übergabesternsegmente übernommen und die Reihe von Gegenständen entlang der Führungsbahn 38 um eine entsprechende Strecke weiterbefördert.

Es soll ausdrücklich nicht ausgeschlossen werden, dass eine erfindungsgemäße Übergabevorrichtung etwa bei Objekten von größerer Ausdehnung bzw. größerem Umfang mittels eines Übergabesternsegments nur genau ein Objekt von der Übergabevorrichtung zur Aufnahmeeinrichtung überführt, die Übergabesternsegmente also jeweils nur eine Aufnahme aufweisen.

Ausgehend von dem in Fig. 1 dargestellten momentanen Betriebszustand werden zuerst die Aufnahmen 32a des Übergabesternsegments 20a, dann die Aufnahmen 32c des Übergabesternsegments 20c und dann die Aufnahmen 32b des Übergabesternsegments 20b aus einer jeweiligen Aufnahme des Zuführsterns 36 mit einem jeweiligen Gegenstand beschickt, wobei das momentan von der Zuführeinrichtung 12 Gegenstände übernehmende Übergabesternsegment und das in Drehrichtung nachfolgende, als nächstes Gegenstände von der Zuführeinrichtung übernehmende Übergabesternsegment kontinuierlich Gegenstände von der Zuführeinrichtung 12 übernehmen, genauso wie es ein normaler Förderstern bzw. ein normales Fördersternrad ohne gegeneinander verdrehbare Sternsegmente bewerkstelligen kann. Aus "Sicht" der Zuführeinrichtung 12 wirkt die Übergabevorrichtung 10 also wie ein herkömmliches kontinuierliches Sternrad.

Die Übergabesternsegmente drehen aber nach Passieren eines der Zuführeinrichtung zugeordneten Aufnahmebereichs, in dem ein jeweiliger Gegenstand vom Zuführstern 36 in die Aufnahmen sequentiell übernommen wird, anders in Richtung zu einem der Abnahmeeinrichtung 14 zugeordneten Abgabebereich weiter als während der Übernahme von Gegenständen aus dem Aufnahmebereich. So werden die Übergabesternsegmente 20a, 20c und 20b nach Passieren des Aufnahmebereichs jeweils beschleunigt, und es kann auch eine diskontinuierliche Drehbewegung entlang des Drehwegs zwischen dem Aufnahmebereich und dem Abgabebereich vorgesehen sein. Zur Übergabe der Gegenstände aus den Aufnahmen des jeweiligen Übergabesternsegments über den Abgabebereich an die Abnahmeeinrichtung wird das jeweilige Übergabesternsegment so drehangetrieben, dass es sich getaktet entsprechend dem Fördertakt der Abnahmeeinrichtung 14 dreht.

Auf dem Drehweg von dem Aufnahmebereich zum Abgabebereich wird die Drehbewegung des jeweiligen Übergabesternsegments also beschleunigt und ggf. auch wieder abgebremst und die Drehbewegung kann benachbart zum Abnahmebereich ggf. auch auf Geschwindigkeit Null abgebremst werden, kurz vorausgehend der getakteten Übernahme der in den Aufnahmen 32a bzw. 32b bzw. 32c enthaltenen Gegenstände. Die Gegenstände werden so gruppenweise, nämlich in Gruppen von - im Beispielsfall - sechs Gegenständen, von der Zuführeinrichtung 12 zur Abnahmeeinrichtung 14 übergeben.

Entlang der Führungsbahn 38 der Abnahmeeinrichtung 14 kann eine Reihe von Gegenständen angeordnet sein, die taktweise entlang der Führungsbahn weiterbefördert wird. Die Gruppe von in den Aufnahmen eines jeweiligen Übergabesternsegments enthaltenen Gegenständen wird dann bevorzugt derart an die Abnahmeeinrichtung übergeben, dass zuerst die noch in den Aufnahmen gehaltene Gruppe von Gegenständen an die Reihe von Gegenständen auf der Führungsbahn 38 angeschlossen wird und dass dann mit dem die Gegenstände auf der Führungsbahn weiter fördernden Fördertakt sequentiell die Gegenstände aus den Aufnahmen auf die Führungsbahn übernommen werden, unter entsprechender Drehung des betreffenden Übergabesternsegments mit einer momentanen Drehgeschwindigkeit, die der momentanen Fördergeschwindigkeit des Fördertakts der Abnahmevorrichtung entspricht.

Nach Passieren des Abgabebereichs, an dem die Gegenstände sequentiell an die Führungsbahn 38 der Abnahmeeinrichtung 14 übergeben werden, wird das betreffende Übergabesternsegment dann auf eine größere Drehgeschwindigkeit beschleunigt und abgebremst, so dass es sich an das in Drehrichtung vorlaufende Übergabesternsegment anschließt. Ein zeitlich nachfolgender Betriebszustand des Betriebszustands der Fig. 1 ist also ein Betriebszustand, in dem das Übergabesternsegment 20a die Drehstellung des Übergabesternsegments 20b einnimmt, in dem das Übergabesternsegment 20b die Drehstellung des Übergabesternsegments 20c einnimmt und in dem das Übergabesternsegment 20c die Drehstellung des Übergabesternsegments 20a einnimmt.

Wie in Bezug auf Fig. 1 schon angesprochen, könnte der Strom von Gegenständen die von den Einrichtungen 10, 12 und 14 gebildete Anlage zur Handhabung von Gegenständen auch in umgekehrter Stromrichtung durchlaufen, entsprechend im Wesentlichen einer Bewegungs- und Drehrichtungsumkehr, so als würde man einen Film rückwärts laufen lassen. Für eine sichere Übergabe der Gegenstände von der getakteten translatorischen Zuführeinrichtung 14 zu der Übergabevorrichtung 10 und von der Übergabevorrichtung 10 zu der kontinuierlichen rotatorischen Abnahmeeinrichtung 12 ggf. vorzusehende Änderungen stellen sich für den Fachmann als rein handwerkliche Anpassung dar, so dass weitere Ausführungen nicht erforderlich sind.

Eine erfindungsgemäße Übergabevorrichtung kann auch dafür dienen, Gegenstände, wie die angesprochenen Behälter (speziell Ampullen, Fläschchen oder Spritzen), gruppenweise zwischen einer getakteten Zuführeinrichtung und einer getakteten Übergabevorrichtung zu übergeben. Eine Übergabevorrichtung mit drei Übergabesegmenten entsprechend den Figuren könnte beispielsweise zwischen zwei translatorischen Einrichtungen, also einer translatorischen Zuführeinrichtung und einer translatorischen Abnahmeeinrichtung, jeweils mit einer Führungsbahn entsprechend der Einrichtung 14 die Gegenstände übernehmen. Ein Ausführungsbeispiel hierfür ergibt sich aus Fig. 1 in Verbindung mit den anderen Figuren, indem die Einrichtung 12 in Fig. 1 durch eine Einrichtung 12' ersetzt ist, die der Einrichtung 14 entspricht, aber mit einem anderen Fördertakt arbeitet. Die als Zuführeinrichtung dienende Einrichtung 12' könnte beispielsweise mit einem Fördertakt zwölf der Behälter sequentiell über den Aufnahmebereich in die Aufnahmen zweier in der Übergabedrehrichtung aufeinander folgender Übergabesternsegmente überführen. Diese als Gruppe von zwölf Gegenständen von den beiden Übergabesternsegmente übernommenen Behälter könnten dann als zwei Teilgruppen zu je sechs Behältern an die Abnahmeeinrichtung 14 übergeben werden, so wie es zuvor für das Ausführungsbeispiel mit dem kontinuierlich zuführenden Zuführstern 36 erläutert wurde. Die Drehbewegung der die Gegenstände von der getakteten Zuführeinrichtung 12' übernehmenden Übergabesternsegmente würde dem Fördertakt der Zuführeinrichtung 12' entsprechen, analog wie für die anhand von Fig. 1 erläuterte Variante mit der Einrichtung 14 als Zuführeinrichtung erläutert, mit dem Unterschied, dass die zuzuführende Gruppe von Gegenständen nicht in sechs Aufnahmen eines einzigen Segments, sondern in zwölf Aufnahmen von zwei sich wie ein entsprechend vergrößertes Segment verhaltende Segmente zuzuführen sind. Der getaktete Förderstrom mit der Taktumsetzung durch die Übergabevorrichtung könnte natürlich auch eine ungekehrte Stromrichtung haben, so dass die Einrichtung 14 als Zuführeinrichtung und die Einrichtung 12' als Abnahmeeinrichtung dient. Es werden dann von zwei Übergabesternsegmenten einzeln übernommene Gruppen von je sechs Behältern durch die Übergabeeinrichtung 10 zu einer Gruppe von zwölf Behältern vereinigt und deren Behälter an die Abnahmeeinrichtung 12' sequentiell übergeben.

Nach im Fachgebiet in jüngerer Zeit verwirklichten Lösungsansätzen würde man die Drehantriebsanordnung zum Drehantreiben der Übergabesternsegmente mit unterschiedlicher und nicht konstanter Drehgeschwindigkeit unter Verdrehung relativ zueinander mit gesonderten Drehantrieben, etwa Servomotoren, realisieren, die jeweils genau einem der Übergabesternsegmente zugeordnet sind und dieses drehantreiben. Ein gewünschter drehwinkelabhängiger Umdrehungszyklus, dem alle Übergabesternsegmente mit einer geeigneten Phasenverschiebung unterliegen für die benötigte Überführung von Behältern zwischen der Zuführeinrichtung 12 und der Abnahmeeinrichtung 14, könnte dann einfach durch eine entsprechende Ansteuerung der gesonderten Drehantriebe erreicht werden, beispielsweise mittels einer elektronischen, beispielsweise computerbasierten Steuereinheit, in der der drehwinkelabhängige Umdrehungszyklus algorithmisch in Form eines Steuerprogramms definiert ist. Dies hätte den Vorteil, dass für andere Übergabe- und Überführungsaufgaben eine leichte Anpassung des Umdrehungszyklus möglich ist, dem die Übergabesternsegmente infolge der entsprechenden Ansteuerung ihrer gesonderten Drehantriebe unterliegen.

Im Hinblick auf eine hohe Zuverlässigkeit gegen Störungen und einen dauerhaft problemlosen Betrieb der Übergabevorrichtung 10 ist nach der Erfindung aber vorgesehen, dass die Drehantriebsanordnung die Übergabesternsegmente gemäß dem gewünschten Umdrehungszyklus rein mechanisch antreibt, auf Basis eines auf eine gemeinsame Dreheingangsseite wirkenden Drehantriebs, der die Dreheingangsseite dann vorzugsweise mit einer konstanten Antriebsdrehbewegung antreibt. Letzteres hat den Vorteil, dass dann ohne weiteres ein gemeinsamer Antrieb für die Zuführeinrichtung 12, die Übergabevorrichtung 10 und die Abnahmeeinrichtung 14 realisierbar ist, wobei aus der gemeinsamen Antriebsdrehbewegung benötigte Drehungen und Linearbewegungen auf mechanische Weise abgeleitet werden können. So kann einfach eine Synchronität des Betriebs der Zuführeinrichtung, der Übergabevorrichtung und der Abnahmeeinrichtung erreicht werden, was ebenfalls für eine hohe Betriebssicherheit der Gesamtanordnung vorteilhaft ist.

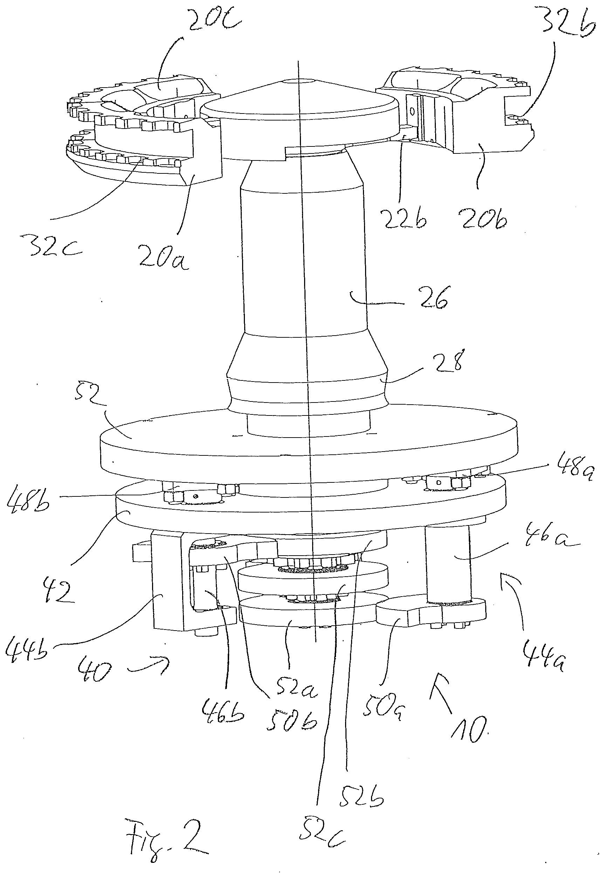

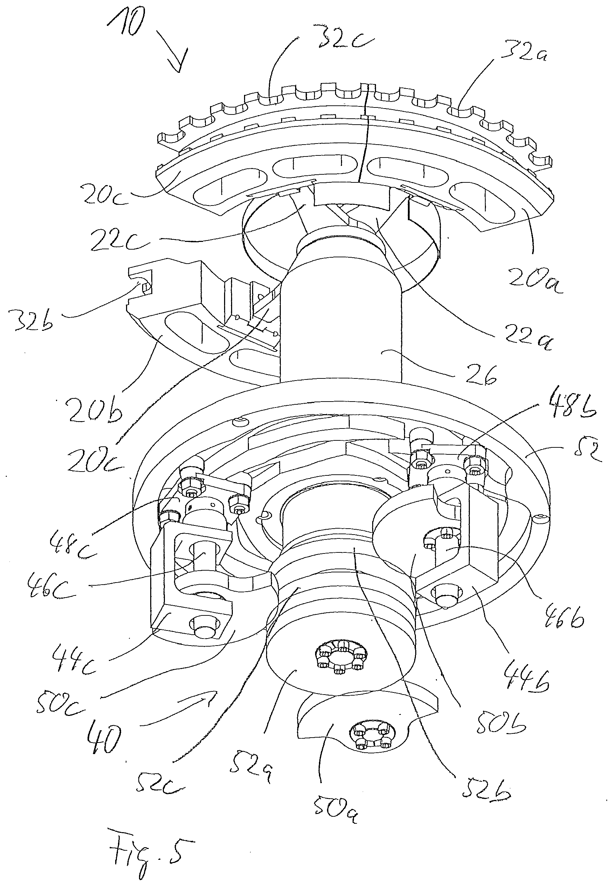

In den Fig. 2, 3 und 5 ist von der Drehantriebsanordnung nur eine mechanische Koppeleinrichtung 40 gezeigt, die auf Basis einer Antriebsdrehbewegung den Übergabesternsegmenten die nötigen absoluten und relativen Drehbewegungen gemäß dem vorgesehenen Umdrehungszyklus erteilt. Als Eingangsseite für den Antrieb kann vorteilhaft eine mittels einer Drehlageranordnung drehbar an einem unteren Endabschnitt des Stützrohrs 26 gelagerte Trägerplatte 42 dienen, an der das Antriebsdrehmoment einleitbar ist, wie schematisch durch einen gestrichelt dargestellten Antriebsmotor 44 in Fig. 3 symbolisiert. Die Trägerplatte 42 könnte hierzu am Außenumfang mit einem Zahnkranz ausgeführt sein. In der Ansicht gemäß Fig. 5 ist die Trägerplatte 42 weggelassen.

Die Trägerplatte 42 ist in radialem Abstand zur Drehachse A mit einer jeweiligen Halterung 44a, 44b bzw. 44c versehen, die mittels einer jeweiligen Drehlageranordnung eine jeweilige Drehwelle 46a, 46b bzw. 46c drehbar lagert, welche sich durch eine jeweilige Durchgangsöffnung der Trägerplatte 42 erstreckt und oberhalb der Trägerplatte 42 mit einem jeweiligen Abtastschlitten 48a, 48b bzw. 48c drehfest verbunden ist, der mit einem, vorzugsweise mit wenigstens zwei, höchstvorzugsweise wenigstens drei, im Beispielsfalle mit vier Abtastelementen, beispielsweise Abtastrollen, in zugeordnete Führungsbahnen 50 in einer drehfest am Stützrohr 26 gehaltenen Führungskurvenplatte (auch als Führungsbahnplatte bezeichenbar, im Folgenden auch nur kurz als Führungsplatte angesprochen) eingreift. Diese Führungsplatte ist mit 52 bezeichnet.

Die Führungsbahnen 50 bzw. diese begrenzende Führungsflächen erstrecken sich rings um das Stützrohr 26, bilden also geschlossene Führungskurven bzw. Führungsbahnen, deren Radialabstand von der Drehachse A variiert, so dass aufgrund des Eingriffs zwischen den Abtastelementen und den Führungsflächen während der Umdrehung der Führungsplatte 52 in Folge der Einleitung des Antriebsdrehmoments den Abtastschlitten 48a, 48b bzw. 48c und damit deren Drehwellen 46a, 46b bzw. 46c Drehbewegungen relativ zur Trägerplatte 42 erteilt werden. Die Abtastschlitten sind jeweils mit einem zugeordneten der Übergabesternsegmente drehbewegungsverkoppelt, so dass aus den Drehbewegungen der Abtastschlitten um ihre jeweilige, zur Drehachse A parallelen Drehachse Drehbewegungen der Übergabesternsegmente 20a, 20b, 20c relativ zu der durch die Drehbewegung der Trägerplatte 42 gegebenen Bezugsdrehbewegungen resultieren. Dies ist beim Ausführungsbeispiel (andere Lösungen sind natürlich möglich) dadurch realisiert, dass die Drehwellen 46a, 46b und 46c der Abtaster 48a, 48b, 48c jeweils einen beispielsweise als Zahnradsegment ausgeführten Eingriffsabschnitt 50a, 50b bzw. 50c drehfest tragen, der mit einem an der Übergabesternsegment-Drehwelle 24a, 24b bzw. 24c drehfest getragenen Gegeneingriffselement, beispielsweise einem Zahnrad oder Zahnradsegment eingreift, insbesondere kämmt. Diese GegenEingriffselemente sind in den Figuren mit 52a, 52b und 52c bezeichnet.

Durch diese Anordnung wird die jeweilige Drehwelle und damit das zugehörige Übergabesternsegment mit einer Bezugsdrehgeschwindigkeit der Trägerplatte 42, vorzugsweise der dort eingeleiteten Antriebsdrehgeschwindigkeit, angetrieben, der allerdings individuelle (relative) Drehbewegungen der Übergabesternsegmente überlagert sind, die aufgrund des Umlaufs der Abtastschlitten 48a, 48b, 48c aus der Wechselwirkung deren Abtastelemente mit den Führungsflächen resultieren, nämlich aus Drehbewegungen der Abtastschlitten folgen, so dass es zwischen den Übergabesternsegmenten zu relativen Verdrehungen kommt, wie es gemäß dem vorgesehenen Umdrehungszyklus erforderlich ist. Im Extremfall kann eine individuelle Drehbewegung eines jeweiligen der Übergabesternsegmente infolge des Abtastens der Führungsbahnen durch den zugeordneten Abtastschlitten momentan die grundlegende Drehbewegung aufgrund des Drehantriebs der Trägerplatte 42 kompensieren, so dass das Übergabesternsegment auch für einen Moment zum Stillstand kommen kann, also momentan die Drehgeschwindigkeit Null aufweist.

Die Führungsbahnen bzw. deren Führungskurven stellen also gewissermaßen Speicher für den gewünschten Drehgeschwindigkeitsverlauf für die Übergabesternsegmente relativ zu der grundlegenden Drehbewegung aufgrund des Drehantriebs der im Beispielsfall als Eingangsseite dienenden Trägerplatte 42 dar, die auf die beschriebene Weise mittels der Drehwellen 46a, 46b, 46c, den Eingriffselementen 50a, 50b und 50c, den Gegeneingriffselementen 52a, 52b, 52c vermittels der Drehwellen 24a, 24b, 24c und der Haltearme 42a, 42b, 42c auf die Übergabesternsegmente 20a, 20b, 20c übertragen werden.

Alle resultierenden Drehbewegungen bzw. relativen Drehbewegungen sind auf die erforderliche Art und Weise zueinander synchron bzw. aufeinander abgestimmt und dabei sogar letztlich von der Eingangsdrehbewegung der Trägerplatte 42 unabhängig. Die Übergabevorrichtung 10, für sich allein betrachtet, wird für jede Antriebsdrehzahl richtig funktionieren. Natürlich stellt sich die Frage einer richtigen Abstimmung und Synchronität in Bezug auf die Funktion der im Gegenstandsstrom stromaufwärts angeordneten Zuführeinrichtung und der im Gegenstandsstrom stromabwärts angeordneten Abnahmeeinrichtung. Steht die Antriebsdrehzahl der Eingangsseite 42 im richtigen Verhältnis zu den Antriebsdrehzahlen der Zuführeinrichtung und der Abgabeeinrichtung und ist eine richtige Phasenbeziehung der jeweiligen Abläufe eingestellt oder durch technische Maßnahmen gewährleistet, wird auch die Gesamtanordnung, nämlich die angesprochene Anlage zum Handhaben von Gegenständen, richtig funktionieren.

Gegenüber herkömmlichen, eine Hebelanordnung aufweisenden Übergabevorrichtungen für die Übergabe von Gegenständen zwischen einer kontinuierlichen Zuführeinrichtung und einer getakteten Abnahmeeinrichtung bzw. für die Übergabe von Gegenständen zwischen einer getakteten Zuführeinrichtung und einer kontinuierlichen Abnahmeeinrichtung ist die erfindungsgemäße Übergabevorrichtung mit geringem Bewegungsspiel realisierbar. Insbesondere wird das Hebelspiel der herkömmlichen Lösungen vermieden. Die erfindungsgemäße Lösung ist auch mit weniger Teilen als durch eine solche herkömmliche Lösung realisierbar und ermöglicht eine höhere Steifigkeit in Bezug auf alle relevanten Abmessungen, relative Anordnungen und relative Positionierungen. Die erfindungsgemäße Übergabevorrichtung mit der eine Kurvensteuerung aufweisenden mechanischen Koppeleinrichtung ist auch vergleichsweise kostengünstig herstellbar und hinsichtlich der radialen wie auch der vertikalen Dimensionen vergleichsweise kompakt. So kann die vertikale Erstreckung unterhalb der Tragplatte 30 wie auch oberhalb der Tragplatte 30, also die vertikale Erstreckung in dem Sterilbereich oberhalb der Tragplatte 30 und die vertikale Erstreckung im nicht sterilen Bereich unterhalb der Tragplatte 30, vergleichsweise klein sein. Dadurch, dass die Hauptantriebselemente in dem "Unterbau" unter der Tragplatte 30 angeordnet sind, wird der Gefahr einer Kontamination wirkungsvoll entgegengewirkt. Es versteht sich, dass die erforderlichen Durchführungen in der Tragplatte 30 und in dem Stützrohr 26 bzw. zwischen den geschachtelten Drehwellen mit geeigneten Abdichtungen ausgeführt sein können, um den Sterilbereich vom nicht sterilen Bereich zu isolieren.

Ein weiterer Vorteil der erfindungsgemäßen Übergabevorrichtung ist, dass die Drehbewegungen der Übergabesternsegmente so durchgeführt werden können, dass ein schonender Durchtransport für die Gegenstände realisiert wird. Dies ist insbesondere für schon gefüllte, möglicherweise noch nicht verschlossene Behälter relevant, bei denen ein Überschwappen befürchtet werden könnte oder aus anderen Gründen eine Schwappstabilisierung wünschenswert ist.

Schließlich, wie schon angesprochen, ist die erfindungsgemäße Ausführung der Übergabevorrichtung mit der mechanischen Koppeleinrichtung, speziell die Realisierung mit dem von den Abtastschlitten und den Führungsbahnen bzw. Führungskurven gebildeten Kurvengetriebe vorteilhaft, aufgrund großer Robustheit und der Vermeidung von Störproblemen, die bei servoangetriebenen Systemen auftreten könnten. Der mechanische Aufbau der Übergabevorrichtung ist auch insgesamt einfach und robust.

Gemäß Vorstehendem wird hiermit auch ein Verfahren zum Handhaben von Gegenständen, beispielsweise zu befüllenden Behältern wie Ampullen, Flaschen oder Fläschchen, Spritzenkörpern und dergleichen bereitgestellt. Das Verfahren kann eine getaktete Befüllung der Behälter vorsehen, beispielsweise durch eine Befülleinrichtung, die der (einer) getakteten Abnahmeeinrichtung zugehörig ist oder der die zu befüllenden Behälter über die getaktete Abnahmeeinrichtung zugeführt werden. Es kommt aber durchaus auch in Betracht, dass die Befülleinrichtung der (einer) getakteten Zuführeinrichtung zugehörig ist oder dass die Gegenstände der getakteten Zuführeinrichtung von der Befülleinrichtung zugeführt werden.

Bereitgestellt wird unter anderem eine Übergabevorrichtung zur Übergabe von Gegenständen von einer Zuführeinrichtung an einer Abnahmeeinrichtung, die mehrere Übergabesternsegmente umfasst, die mittels einer Drehantriebsanordnung mit unterschiedlicher und nicht konstanter Drehgeschwindigkeit unter Verdrehung relativ zueinander bezogen auf eine gemeinsame Drehachse drehantreibbar sind. Die Übergabesternsegmente weisen jeweils wenigstens eine Aufnahme, vorzugsweise wenigstens eine Reihe von entlang einem Außenumfang beabstandeten Aufnahmen auf, mit denen durch Verdrehung des jeweiligen Übergabesternsegments in einer Übergabedrehrichtung von einem Aufnahmebereich zu einem Abgabebereich die Gegenstände von der Zuführeinrichtung über den Aufnahmebereich zum Abgabebereich und über diesen an die Abnahmeeinrichtung übergebbar sind. Ein um die Drehachse drehbar gelagerter Träger lagert in radialem Abstand zur Drehachse den Übergabesternsegmenten zugeordnete Abtaster drehbar, die in wenigstens eine sich um die Drehachse erstreckende geschlossene Führungskurve einer Kurvensteuerung der Drehantriebsanordnung eingreifen und aufgrund einer an einer Dreheingangsseite eingeleiteten Antriebsdrehbewegung und gemäß dem Verlauf der wenigstens einen stationären Führungskurve um eine jeweilige, zur Drehachse parallele Abtasterdrehachse relativ zum Träger drehantreibbar sind, wobei die Abtaster mit dem jeweiligen zugeordneten Übergabesternsegment bewegungsverkoppelt sind, um dem Übergabesternsegment eine Drehbewegung zu erteilen, die einer Überlagerung aus einer Bezugsdrehbewegung des Trägers und einer aus der Drehung des Abtasters relativ zu Träger resultierenden Relativdrehbewegung entspricht.

## Patentansprüche

1. Übergabevorrichtung (10) zur Übergabe von Gegenständen von einer Zuführeinrichtung (12; 14) an eine Abnahmeeinrichtung (14; 12), wobei die Übergabevorrichtung wenigstens einen der Zuführeinrichtung (12; 14) zugeordneten Aufnahmebereich, wenigstens einen der Abnahmeeinrichtung (14; 12) zugeordneten Abgabebereich und wenigstens zwei, vorzugsweise wenigstens drei um eine gemeinsame Drehachse (A) drehbare Übergabesternsegmente (20a, 20b, 20c) aufweist, die jeweils mit wenigstens einer Aufnahme, vorzugsweise mit einer Mehrzahl von entlang eines Außenumfangs in einer Übergabedrehrichtung gemäß einer definierten Teilung beabstandeten Aufnahmen (32a; 32b; 32c) ausgeführt sind und in der Übergabedrehrichtung derart drehantreibar sind, dass ein jeweiliges Übergabesegment abwechselnd dem/einem Aufnahmebereich und dem/einem Abgabebereich räumlich zugeordnet ist durch Einnahme wenigstens einer dem Aufnahmebereich zugeordneten Drehstellung oder drehendes Passieren des Aufnahmebereichs bzw. durch Einnahme wenigstens einer dem Abgabebereich zugeordneten Drehstellung oder drehendes Passieren des Abgabebereichs, um aus dem Aufnahmebereich wenigstens einen der durch die Zuführeinrichtung (12; 14) in diesen zugeführten Gegenstände in die Aufnahme bzw. in eine jeweilige der Aufnahmen (32a; 32b; 32c) aufzunehmen und zum in der Übergabedrehrichtung nachfolgenden Abgabebereich zu überführen und über diesen an die Abnahmeeinrichtung (14; 12) abzugeben;
wobei die Übergabesternsegmente mittels einer Drehantriebsanordnung (40, 44) der Übergabevorrichtung mit unterschiedlicher und nicht konstanter Drehgeschwindigkeit unter Verdrehung relativ zueinander bezogen auf die Drehachse drehantreibbar sind;
wobei die Drehantriebsanordnung eine mit einer Kurvensteuerung ausgeführte mechanische Koppeleinrichtung (40) aufweist, über die die Übergabesternsegmente (20a, 20b, 20c) mit einer Dreheingangsseite (42) der Koppeleinrichtung drehbewegungsverkoppelt sind und mittels eines auf die Dreheingangsseite (42) wirkenden Drehantriebs (44) gemeinsam drehantreibbar sind,
wobei die Kurvensteuerung (50, 48a, 48b, 48c) für jedes der Übergabesternsegmente (20a, 20b, 20c) wenigstens einen zugeordneten Abtaster (48a; 48b; 48c) aufweist, der mit wenigstens einer sich um die Drehachse (A) erstreckenden geschlossenen Führungskurve (50) der Kurvensteuerung eingreift und durch die an der Dreheingangsseite (42) eingeleitete Antriebsdrehbewegung relativ zu der wenigstens einen Führungskurve (50) verstellbar ist, um aus dem Verlauf der wenigstens einen Führungskurve (50) eine definierte Relativdrehbewegung des jeweiligen Übergabestemsegments (20a; 20b; 20c) relativ zu einer Bezugsdrehbewegung aufgrund der an der Dreheingangsseite (42) eingeleiteten Antriebsdrehbewegung abzuleiten; wobei ein um die Drehachse drehbar gelagerter Träger (42) die Abtaster (48a, 48b, 48c) in radialem Abstand zur Drehachse (A) drehbar lagert, die aufgrund der Antriebsdrehbewegung und gemäß dem Verlauf der wenigstens einen stationären Führungskurve (50) um eine jeweilige, zur Drehachse (A) parallele Abtasterdrehachse relativ zum Träger (42) drehantreibbar sind, wobei die Abtaster mit dem jeweiligen zugeordneten Übergabesternsegment (20a; 20b; 20c) bewegungsverkoppelt sind, um dem Übergabesternsegment eine Drehbewegung zu erteilen, die einer Überlagerung aus der Bezugsdrehbewegung des Trägers (42) und der aus der Drehung des Abtasters (48a; 48b; 48c) relativ zum Träger resultierenden Relativdrehbewegung entspricht; wobei die Abtaster (48a, 48b, 48c) jeweils einen mit diesem drehfesten Eingriffsabschnitt aufweisen oder mit einem jeweiligen gesonderten Eingriffselement (50a; 50b; 50c) zur gemeinsamen Drehung um die Abtasterdrehachse verbunden sind, wobei der Eingriffsabschnitt bzw. das Eingriffselement mit einem vorzugsweise radial innenliegenden Gegeneingriffselement (52a; 52b; 52c) eingreift, welches mit einem jeweils zugeordneten der Übergabesternsegmente (20a; 20b; 20c) zur gemeinsamen Drehung verbunden ist; **dadurch gekennzeichnet, dass** der Eingriffsabschnitt bzw. das Eingriffselement (50a; 50b; 50c) und das Gegeneingriffelement (52a; 52b; 52c) einen Zahnkranz oder ein Zahnkranzsegment aufweisen, die miteinander kämmen.

2. Übergabevorrichtung nach Anspruch 1, **dadurch gekennzeichnet, dass** der Träger (42) als Dreheingangsseite (42) dient.

3. Übergabevorrichtung nach Anspruch 1 oder 2, **dadurch gekennzeichnet, dass** die Übergabestemsegmente (20a, 20b, 20c) über eine jeweilige Drehwelle (24a; 24b; 24c) von der Drehantriebsanordnung (40; 44) drehantreibbar sind, wobei die Drehwellen vorzugsweise koaxial verlaufen und hierfür zumindest zum Teil als Hohlwellen ausgeführt sind.

4. Übergabevorrichtung nach Anspruch 3, **dadurch gekennzeichnet, dass** die Gegeneingriffselemente (50a, 50b, 50c) von einer jeweiligen der Drehwellen drehfest getragen sind.

5. Übergabevorrichtung nach Anspruch 3 oder 4, **dadurch gekennzeichnet, dass** sich die Drehwellen (24a, 24b, 24c) durch ein vermittels einer Drehlageranordnung die Übergabesternsegmente (20a, 20b, 20c) drehbar lagerndes Stützrohr (26) erstrecken, wobei die Übergabesternsegment (20a, 20b, 20c) im oberen Bereich angeordnet sind und die Kurvensteuerung mit der wenigstens einen Führungskurve (50) und den Abtastern (48a, 48b, 48c) und ggf. dem Drehantrieb im unteren Bereich angeordnet ist.

6. Übergabevorrichtung nach einem der Ansprüche 3 bis 5, **dadurch gekennzeichnet, dass** sich die Drehwellen (24a, 24b, 24c) durch eine einen oberen, ggf. sterilen Bereich von einem unteren, ggf. nicht sterilen Bereich trennenden Trennplatte (30) erstrecken, wobei die Übergabesternsegment (20a, 20b, 20c) im oberen Bereich angeordnet sind und die Kurvensteuerung mit der wenigstens einen Führungskurve (50) und den Abtastern (48a, 48b, 48c) und ggf. dem Drehantrieb im unteren Bereich angeordnet ist.

7. Übergabevorrichtung nach Anspruch 6, **dadurch gekennzeichnet, dass** die Trennplatte als Tragplatte (30) ausgeführt ist, die das Stützrohr (26) trägt.

8. Übergabevorrichtung nach einem der Ansprüche 1 bis 7, **dadurch gekennzeichnet, dass** die Übergabesternsegmente (20a, 20b, 20c) jeweils wenigstens eine Reihe von entlang dem Außenumfang beabstandeten Aufnahmen (32a; 32b; 32c) aufweisen, zwischen denen in der Übergabedrehrichtung keine Aufnahme eines anderen Übergabesternsegments angeordnet ist, so dass durch Verdrehen des jeweiligen Übergabesternsegments in der Übergabedrehrichtung vermittels der Drehantriebsanordnung die Aufnahmen der/einer solchen Reihe von Aufnahmen gemeinsam oder sequentiell nacheinander dem Aufnahmebereich räumlich zuordenbar sind, um eine Gruppe von Gegenständen aus dem Aufnahmebereich in die Aufnahmen der Reihe aufzunehmen und als Gruppe zum in der Übergabedrehrichtung nachfolgenden Abgabebereich zu überführen und über diesen an die Abnahmeeinrichtung (14; 12) abzugeben.

9. Übergabevorrichtung nach Anspruch 8, **dadurch gekennzeichnet, dass** von der Zuführeinrichtung (12; 14) und von der Abnahmeeinrichtung (14; 12) eine (14) für eine getaktete Förderung der Gegenstände und die andere (12) für eine kontinuierliche Förderung der Gegenstände vorgesehen ist und dass die Übergabevorrichtung (10) dafür vorgesehen ist, kontinuierlich vermittels der Zuführeinrichtung (12) über den Aufnahmebereich bereitgestellte Gegenstände über den Abgabebereich der Abnahmevorrichtung (14) getaktet für eine getaktete Weiterbeförderung bereitzustellen bzw. dass die Übergabevorrichtung (10) dafür vorgesehen ist, vermittels der Zuführeinrichtung (14) über den Aufnahmebereich getaktet bereitgestellte Gegenstände über den Abgabebereich der Abnahmevorrichtung (12) kontinuierlich für eine kontinuierliche Weiterbeförderung bereitzustellen.

10. Übergabevorrichtung nach Anspruch 8 oder 9, **dadurch gekennzeichnet, dass** die Aufnahmen (32a; 32b; 32c) der Gruppe im Zuge einer Drehbewegung des Übergabesternsegments (20a; 20b; 20c) sequentiell nacheinander dem Aufnahmebereich oder dem Abgabebereich oder zuerst dem Aufnahmebereich und dann dem Abgabebereich räumlich zuordenbar sind, indem die Aufnahmen des Übergabesternsegments die dem Aufnahmebereich zugeordnete Drehstellung drehend passieren, in der ein jeweiliger Gegenstand der Gruppe von Gegenständen aus dem Aufnahmebereich in die betreffende Aufnahme der Reihe aufnehmbar ist, bzw. indem die Aufnahmen des Übergabesternsegments die dem Abgabebereich zugeordnete Drehstellung drehend passieren, in der ein jeweiliger Gegenstand der Gruppe von Gegenständen über den Abgabebereich an die Abnahmeeinrichtung abgebbar ist.

11. Verfahren zum Handhaben von Gegenständen, beispielsweise zu befüllenden Behältern, umfassend eine Übergabevorrichtung (10) mit einer die Gegenstände der Übergabevorrichtung zuführenden Zuführeinrichtung (12; 14) und einer die Gegenstände von der Übergabevorrichtung (10) erhaltenden Abnahmeeinrichtung (14; 12) gemäß einem der vorangehenden Ansprüche, wobei das Verfahren ein kontinuierliches oder getaktetes Zuführen von Gegenständen zu der Übergabevorrichtung (10) mittels der Zuführeinrichtung (10; 14), ein Überführen der Gegenstände zu der Abnahmeeinrichtung (14; 12) mittels der Übergabeeinrichtung (10) und eine getaktete oder kontinuierliche Weiterbeförderung der Gegenstände mittels der Abnahmeeinrichtung (14; 12) umfasst, wobei vorzugsweise die Gegenstände durch die Zuführeinrichtung (10) kontinuierlich der Übergabevorrichtung (10) zugeführt und durch die Abnahmeeinrichtung (14) getaktet weiterbefördert werden oder die Gegenstände durch die Zuführeinrichtung (14) getaktet der Übergabevorrichtung (10) zugeführt und durch die Abnahmeeinrichtung (12) kontinuierlich weiterbefördert werden, wobei das Verfahren vorzugsweise ferner eine getaktete Befüllung der als Behälter ausgeführten Gegenstände durch eine Befülleinrichtung umfasst, die der getakteten Abnahmeeinrichtung (14) zugehörig ist oder der die Gegenstände über die getaktete Abnahmeeinrichtung (14) zugeführt werden oder die der getakteten Zuführeinrichtung (14) zugehörig ist oder von der die Gegenstände der getakteten Zuführeinrichtung (14) zugeführt werden.

## Claims

1. Transfer device (10) for transferring objects from a feed apparatus (12; 14) to a removal apparatus (14; 12), the transfer device comprising at least one pick-up region, which is assigned to the feed apparatus (12; 14), at least one discharge region, which is assigned to the removal apparatus (14; 12), and at least two, preferably at least three, transfer star segments (20a, 20b, 20c) that are rotatable about a common axis of rotation (A), each of which is formed having at least one receptacle, preferably having a plurality of receptacles (32a; 32b; 32c), which are spaced apart at defined intervals over an outer circumference in a transfer direction of rotation and can be driven to rotate in the transfer direction of rotation such that a particular transfer segment is alternately spatially assigned to the/a pick-up region and to the/a discharge region by assuming at least one rotary position assigned to the pick-up region or by rotating past the pick-up region, or by assuming at least one rotary position assigned to the discharge region or by rotating past the discharge region, in order to pick up at least one of the objects fed into the pick-up region by the feed apparatus (12; 14) from the pick-up region and receive it in the receptacle or in a particular receptacle (32a; 32b; 32c) of said receptacles, and to transfer said object to the subsequent discharge region in the transfer direction of rotation and to discharge it to the removal apparatus (14; 12) via said discharge region,
it being possible for the transfer star segments to be driven to rotate at variable and nonconstant rotary speeds by means of a rotary drive arrangement (40, 44) of the transfer device by said segments rotating relative to one another in relation to the axis of rotation; the rotary drive arrangement comprising a mechanical coupling apparatus (40) that is designed having a cam control system and by means of which the transfer star segments (20a, 20b, 20c) are rotationally coupled to a rotation input side (42) of the coupling apparatus and can be driven to rotate together therewith by means of a rotary drive (44) acting on the rotation input side (42),
the cam control system (50, 48a, 48b, 48c) for each of the transfer star segments (20a, 20b, 20c) comprising at least one associated scanning device (48a; 48b; 48c), which engages with at least one closed guide cam (50) of the cam control system that extends around the axis of rotation (A) and can be displaced relative to the at least one guide cam (50) by the rotary drive motion introduced on the rotation input side (42), in order to derive, from the course of the at least one guide cam (50), a defined rotary motion of the particular transfer star segment (20a; 20b; 20c) relative to a reference rotary motion as a result of the rotary drive motion introduced on the rotation input side (42);
a carrier (42) that is mounted so as to be rotatable about the axis of rotation rotatably mounts the scanning devices (48a, 48b, 48c) at a radial distance from the axis of rotation (A), which scanning devices can be driven to rotate relative to the carrier (42) about a particular scanning device axis of rotation, that is parallel to the axis of rotation (A), as a result of the rotary drive motion and according to the course of the at least one stationary guide cam (50), the scanning devices being rotationally coupled to the particular associated transfer star segment (20a; 20b; 20c), in order to impart a rotary motion on the transfer star segment that corresponds to a superposition from the reference rotary motion of the carrier (42) and from the relative rotary motion caused by the rotation of the scanning device (48a; 48b; 48c) relative to the carrier,
the scanning devices (48a, 48b, 48c) each comprising an engagement portion that is fixed thereto for conjoint rotation, or being connected to a particular, separate engagement element (50a; 50b; 50c) for conjoint rotation about the scanning device axis of rotation, the engagement portion or the engagement element engaging with a preferably radially internal counter engagement element (52a; 52b; 52c) that is connected for conjoint rotation to one of the transfer star segments (20a; 20b; 20c) associated in each case, **characterised in that** the engagement portion or the engagement element (50a; 50b; 50c) and the counter engagement element (52a; 52b; 52c) comprise a ring gear or a ring gear segment that mesh with one another.

2. Transfer device according to claim 1, **characterised in that** the carrier (42) acts as a rotation input side (42).

3. Transfer device according to either claim 1 or claim 2, **characterised in that** the transfer star segments (20a, 20b, 20c) can be driven to rotate by means of a particular rotary shaft (24a; 24b; 24c) of the rotary drive arrangement (40; 44), the rotary shafts preferably extending coaxially and being designed as hollow shafts, at least in part, for this purpose.

4. Transfer device according to claim 3, **characterised in that** the counter engagement elements (50a, 50b, 50c) are carried by a particular shaft of said rotary shafts so as to rotate therewith.

5. Transfer device according to either claim 3 or claim 4, **characterised in that** the rotary shafts (24a, 24b, 24c) extend through a support pipe (26), which rotationally mounts the transfer star segments (20a, 20b, 20c) by means of a rotary bearing arrangement, the transfer star segment (20a, 20b, 20c) being arranged in the upper region and the cam control system comprising the at least one guide cam (50) and the scanning devices (48a, 48b, 48c) and optionally the rotary drive being arranged in the lower region.

6. Transfer device according to any of claims 3 to 5, **characterised in that** the rotary shafts (24a, 24b, 24c) extend through a separation plate (30) that separates an upper region that may be sterile from a lower region that may not be sterile, the transfer star segment (20a, 20b, 20c) being arranged in the upper region and the cam control system comprising the at least one guide cam (50) and the scanning devices (48a, 48b, 48c) and optionally the rotary drive being arranged in the lower region.

7. Transfer device according to claim 6, **characterised in that** the separation plate is formed as a carrier plate (30) that carries the support pipe (26).

8. Transfer device according to any of claims 1 to 7, **characterised in that** the transfer star segments (20a, 20b, 20c) each comprise at least one row of receptacles (32a; 32b; 32c) spaced apart over the outer circumference, a receptacle of another transfer star segment not being arranged between said receptacles in the transfer direction of rotation and so, by rotating the particular transfer star segment in the transfer direction of rotation by means of the rotary drive arrangement, the receptacles of the/a row of receptacles of this type are spatially assignable, either together or sequentially one after the other, to the pick-up region in order to pick up a group of objects from the pick-up region and receive them in the receptacles of the row and to transfer said objects to the subsequent discharge region in the transfer direction of rotation as a group and to discharge them to the removal apparatus (14; 12) via said discharge region.

9. Transfer device according to claim 8, **characterised in that**, with regard to the feed apparatus (12; 14) and the removal apparatus (14; 12) one (14) is intended for intermittently conveying the objects and the other (12) is intended for continuously conveying the objects, and **in that** the transfer device (10) is intended to intermittently provide objects, which are continuously provided by means of the feed apparatus (12) via the pick-up region, in order to intermittently further convey said objects via the discharge region of the removal device (14), or **in that** the transfer device (10) is intended to continuously provide objects, which are provided intermittently by means of the feed apparatus (14) via the pick-up region, in order to continuously further convey said objects via the discharge region of the removal device (12).

10. Transfer device according to either claim 8 or claim 9, **characterised in that**, during a rotary motion of the transfer star segment (20a; 20b; 20c), the receptacles (32a; 32b; 32c) of the group can be spatially assigned to the pick-up region or to the discharge region sequentially one after the other, or can be spatially assigned first to the pick-up region and then to the discharge region, by the receptacles of the transfer star segment rotating past the rotary position assigned to the pick-up region, in which position a particular object of the group of objects can be picked up from the pick-up region and received in the relevant receptacle of the row, or by the receptacles of the transfer star segment rotating past the rotary position assigned to the discharge region, in which position a particular object of the group of objects can be discharged to the removal apparatus via the discharge region.

11. Method for handling objects, for example containers to be filled, comprising a transfer device (10) having a feed apparatus (12; 14) feeding the objects to the transfer device, and a removal apparatus (14; 12) that obtains the objects from the transfer device (10) according to any of the preceding claims, wherein the method comprises continuously or intermittently feeding objects to the transfer device (10) by means of the feed apparatus (10; 14), passing the objects on to the removal apparatus (14; 12) by means of the transfer apparatus (10) and intermittently or continuously further conveying the objects by means of the removal apparatus (14; 12), wherein the objects are preferably fed continuously to the transfer device (10) by the feed apparatus (10) and are intermittently further conveyed by the removal apparatus (14), or the objects are intermittently fed by the feed apparatus (14) to the transfer device (10) and continuously further conveyed by the removal device (12), wherein the method preferably further comprises intermittently filling the objects, formed as containers, by means of a filling apparatus, which is associated with the intermittently operating removal apparatus (14), or to which the objects are fed via the intermittently operating removal apparatus (14), or which is associated with the intermittently operating feed apparatus (14), or from which the objects are fed to the intermittently-operating feed apparatus (14).

## Revendications

1. Dispositif de transfert (10) pour le transfert d'objets d'un dispositif de fourniture (12 ; 14) à un dispositif de retrait (14 ; 12), dans lequel le dispositif de transfert présente au moins une zone de réception associée au dispositif de fourniture (12 ; 14), au moins une zone de distribution associée au dispositif de retrait (14 ; 12) et au moins deux, de préférence au moins trois segments d'étoile de transfert (20a, 20b, 20c) rotatifs autour d'un axe de rotation (A) commun qui sont réalisés respectivement avec au moins un logement, de préférence avec une pluralité de logements (32a ; 32b ; 32c) espacés le long d'une périphérie extérieure dans un sens de rotation de transfert selon une pente définie et sont entraînables en rotation dans le sens de rotation de transfert de telle manière qu'un segment de transfert respectif soit associé dans l'espace en alternance à la/une zone de réception et la/une zone de distribution par occupation d'au moins une position de rotation associée à la zone de réception ou passage rotatif de la zone de réception ou par occupation d'au moins une position de rotation associée à la zone de distribution ou passage rotatif de la zone de distribution afin de recevoir à partir de la zone de réception au moins un des objets fournis par le dispositif de fourniture (12 ; 14) dans celle-ci dans le logement ou dans un respectif des logements (32a ; 32b ; 32c) et le transférer à la zone de distribution suivante dans le sens de rotation de transfert et de le distribuer par celle-ci au dispositif de retrait (14 ; 12) ;
dans lequel les segments d'étoile de transfert peuvent être entraînés en rotation par rapport à l'axe de rotation à l'aide d'un agencement d'entraînement de rotation (40, 44) du dispositif de transfert à différente vitesse de rotation et non constante sous rotation les uns par rapport aux autres ;
dans lequel l'agencement d'entraînement de rotation présente un dispositif de couplage (40) mécanique réalisé avec une commande de came, par lequel les segments d'étoile de transfert (20a, 20b, 20c) sont couplés en mouvement de rotation avec un côté d'entrée de rotation (42) du dispositif de couplage et sont entraînables en rotation en commun à l'aide d'un entraînement de rotation (44) agissant sur le côté d'entrée de rotation (42),
dans lequel la commande de came (50, 48a, 48b, 48c) pour chacun des segments d'étoile de transfert (20a, 20b, 20c) présente au moins un analyseur associé (48a ; 48b ; 48c) qui vient en prise avec au moins une came de guidage (50) fermée s'étendant autour de l'axe de rotation (A) de la commande de came et peut être déplacé par le mouvement de rotation d'entraînement introduit sur le côté d'entrée de rotation (42) par rapport à l'au moins une came de guidage (50) afin de dériver de l'étendue de l'au moins une came de guidage (50) un mouvement de rotation relative défini du segment d'étoile de transfert (20a ; 20b ; 20c) respectif par rapport à un mouvement de rotation de référence en raison du mouvement de rotation d'entraînement introduit sur le côté d'entrée de rotation (42) ;
dans lequel un support (42) logé de manière rotative autour de l'axe de rotation loge de manière rotative les analyseurs (48a, 48b, 48c) à distance radiale de l'axe de rotation (A) qui sont entraînables en rotation en raison du mouvement de rotation d'entraînement et selon l'étendue de l'au moins une came de guidage (50) stationnaire autour d'un axe de rotation d'analyseur respectif parallèle à l'axe de rotation (A) par rapport au support (42), dans lequel les analyseurs sont couplés en mouvement au segment d'étoile de transfert (20a ; 20b ; 20c) associé respectif afin de donner un mouvement de rotation au segment d'étoile de transfert, qui correspond à un recouvrement du mouvement de rotation de référence du support (42) et du mouvement de rotation relative résultant de la rotation de l'analyseur (48a ; 48b ; 48c) par rapport au support ;
dans lequel les analyseurs (48a, 48b, 48c) présentent respectivement une section de mise en prise fixée sans pouvoir tourner à celui-ci ou sont reliés à un élément de mise en prise (50a ; 50b ; 50c) séparé respectif pour la rotation commune autour de l'axe de rotation d'analyseur, dans lequel la section de mise en prise ou l'élément de mise en prise vient en prise avec un élément de mise en prise antagoniste (52a ; 52b ; 52c) de préférence radialement intérieur qui est relié à un respectivement associé des segments d'étoile de transfert (20a ; 20b ; 20c) pour la rotation commune ; **caractérisé en ce que**
la section de mise en prise ou l'élément de mise en prise (50a ; 50b ; 50c) et l'élément de mise en prise antagoniste (52a ; 52b ; 52c) présentent une couronne dentée ou un segment de couronne dentée qui s'engrènent ensemble.

2. Dispositif de transfert selon la revendication 1, **caractérisé en ce que** le support (42) sert de côté d'entrée de rotation (42).

3. Dispositif de transfert selon la revendication 1 ou 2, **caractérisé en ce que** les segments d'étoile de transfert (20a, 20b, 20c) sont entraînables en rotation par le biais d'un arbre de rotation respectif (24a ; 24b ; 24c) de l'agencement d'entraînement de rotation (40 ; 44), dans lequel les arbres de rotation s'étendent de préférence coaxialement et sont réalisés à cet effet au moins en partie comme des arbres creux.

4. Dispositif de transfert selon la revendication 3, **caractérisé en ce que** les éléments de mise en prise antagoniste (50a, 50b, 50c) sont portés de manière fixe sans pouvoir tourner par un arbre respectif des arbres de rotation.

5. Dispositif de transfert selon la revendication 3 ou 4, **caractérisé en ce que** les arbres de rotation (24a, 24b, 24c) s'étendent au travers d'un tube d'appui (26) logeant de manière rotative les segments d'étoile de transfert (20a, 20b, 20c) à l'aide d'un agencement de palier rotatif, dans lequel les segments d'étoile de transfert (20a, 20b, 20c) sont agencés dans la zone supérieure et la commande de came est agencée avec l'au moins une came de guidage (50) et les analyseurs (48a, 48b, 48c) et éventuellement l'entraînement de rotation dans la zone inférieure.

6. Dispositif de transfert selon l'une des revendications 3 à 5, **caractérisé en ce que** les arbres de rotation (24a, 24b, 24c) s'étendent au travers d'une plaque de séparation (30) séparant une zone supérieure éventuellement stérile d'une zone inférieure, éventuellement non stérile, dans lequel les segments d'étoile de transfert (20a, 20b, 20c) sont agencés dans la zone supérieure et la commande de came est agencée avec l'au moins une came de guidage (50) et les analyseurs (48a, 48b, 48c) et éventuellement l'entraînement de rotation dans la zone inférieure.

7. Dispositif de transfert selon la revendication 6, **caractérisé en ce que** la plaque de séparation est réalisée comme une plaque porteuse (30) qui porte le tube d' appui (26).

8. Dispositif de transfert selon l'une des revendications 1 à 7, **caractérisé en ce que** les segments d'étoile de transfert (20a, 20b, 20c) présentent respectivement au moins une rangée de logements (32a ; 32b ; 32c) espacés le long de la périphérie extérieure, entre lesquels dans le sens de rotation de transfert, aucun logement d'un autre segment d'étoile de transfert n'est agencé, de sorte que par la rotation du segment d'étoile de transfert respectif dans le sens de rotation de transfert à l'aide de l'agencement d'entraînement de rotation, les logements puissent être associés à la/une telle rangée de logements en commun ou séquentiellement l'un après l'autre à la zone de logement dans l'espace afin de recevoir un groupe d'objets de la zone de réception dans les logements de la rangée et de le transférer comme groupe vers la zone de distribution suivante dans le sens de rotation de transfert et de le distribuer par celle-ci au dispositif de retrait (14 ; 12).

9. Dispositif de transfert selon la revendication 8, **caractérisé en ce que** parmi le dispositif de fourniture (12 ; 14) et le dispositif de retrait (14 ; 12), l'un (14) est prévu pour un transport cadencé des objets et l'autre (12) pour un transport continu des objets et **en ce que** le dispositif de transfert (10) est prévu afin de mettre à disposition des objets mis à disposition en continu à l'aide du dispositif de fourniture (12) par la zone de réception sur la zone de distribution du dispositif de retrait (14) de manière cadencée pour une suite de transport cadencé ou **en ce que** le dispositif de transfert (10) est prévu afin de mettre à disposition des objets mis à disposition à l'aide du dispositif de fourniture (14) sur la zone de réception de manière cadencée sur la zone de distribution du dispositif de retrait (12) en continu pour une suite de transport continu.

10. Dispositif de transfert selon la revendication 8 ou 9, **caractérisé en ce que** les logements (32a ; 32b ; 32c) du groupe au cours d'un mouvement de rotation du segment d'étoile de transfert (20a ; 20b ; 20c) séquentiellement l'un après l'autre peuvent être associés à la zone de réception ou la zone de distribution, ou tout d'abord à la zone de réception et ensuite la zone de distribution dans l'espace **en ce que** les logements du segment d'étoile de transfert passent en rotation la position de rotation associée à la zone de réception, dans laquelle un objet respectif du groupe d'objets peut être reçu de la zone de réception dans le logement concerné de la rangée, ou **en ce que** les logements du segment d'étoile de transfert passent en rotation la position de rotation associée à la zone de distribution, dans laquelle un objet respectif du groupe d'objets peut être distribué sur la zone de distribution au dispositif de retrait.

11. Procédé de manipulation d'objets, par exemple de récipients à remplir, comprenant un dispositif de transfert (10) avec un dispositif de fourniture (12 ; 14) fournissant les objets au dispositif de transfert et un dispositif de retrait (14 ; 12) recevant les objets du dispositif de transfert (10) selon l'une des revendications précédentes, dans lequel le procédé comporte une fourniture continue ou cadencée d'objets au dispositif de transfert (10) à l'aide du dispositif de fourniture (10 ; 14), un transfert des objets au dispositif de retrait (14 ; 12) à l'aide du dispositif de transfert (10) et une suite de transport cadencé ou continu des objets à l'aide du dispositif de retrait (14 ; 12), dans lequel de préférence, les objets sont fournis par le dispositif de fourniture (10) en continu au dispositif de transfert (10) et sont encore transportés de manière cadencée par le dispositif de retrait (14), ou les objets sont fournis par le dispositif de fourniture (14) de manière cadencée au dispositif de transfert (10) et sont encore transportés en continu par le dispositif de retrait (12), dans lequel le procédé comporte de préférence de plus un remplissage cadencé des objets réalisés comme récipient par un dispositif de remplissage qui est afférent au dispositif de retrait (14) cadencé ou auquel sont fournis les objets par le biais du dispositif de retrait (14) cadencé ou qui est afférent au dispositif de fourniture (14) cadencé ou par lequel les objets sont fournis au dispositif de fourniture (14) cadencé.
